# EUROPÄISCHE PATENTANMELDUNG

(11) **EP 3 428 345 A1**
(43) Veröffentlichungstag der Anmeldung: **16.01.2019**
(21) Anmeldenummer: 18183506.7
(22) Anmeldetag: 13.07.2018
(51) Int. Cl.: E02D 27/42, E02D 27/52

(54) **GRÜNDUNG FÜR EINE OFFSHORE-WINDENERGIEANLAGE**

(30) Priorität: 13.07.2017 DE 102017115817
(71) Anmelder: Ramboll GmbH, 20097 Hamburg (DE)
(72) Erfinder: Voßbeck, Marc, 22587 Hamburg (DE)
(74) Vertreter: Raffay & Fleck

(57) **Zusammenfassung**

Schwergewichtsgründung (10) für eine Offshore-Windenergieanlage (WEA) mit:
• einem Anschluss- und Übergangsstück (11), zum Verbinden mit einem Turmabschnitt (T) der Windenergieanlage,
• einem unterhalb desselben angeordneten Auflagerabschnitt (16) und
• einem Zwischenabschnitt (13), der sich in vertikaler Richtung erstreckt und das Anschluss- und Übergangsstück (11) mit dem Auflagerabschnitt (16) verbindet,
wobei der Auflagerabschnitt (16) in einer Querrichtung eine größere Ausdehnung hat als das Anschluss- und Übergangsstück (11), und der Zwischenabschnitt (13) in einer Fachwerkbauweise mit Pfeiler- (19) und Strebenelementen (20, 26) gebildet ist, und ein maximaler Abstand eines Endpunktes des Auflagerabschnittes (16) von einer vertikalen Mittelachse der Gründung (10) wenigstens das Siebenfache eines Radius des Anschluss- und Übergangsstücks (11) an einer Verbindungsstelle (12) zum Verbinden mit einem Turmabschnitt (T) beträgt und wobei an dem Auflagerabschnitt (16) in maximal von der vertikalen Mittelachse beabstandeten Bereichen vertikal über den Auflagerabschnitt (16) nach unten vorstehende Stützelemente (17) angeordnet sind, die an ihren unteren Enden Sohlflächen ausbilden.

## Beschreibung

Die vorliegende Erfindung betrifft eine Schwergewichtsgründung für eine Offshore-Windenergieanlage mit den Merkmalen des Oberbegriffs des Anspruchs 1. Beschrieben wird auch ein Verfahren, eine solche Schwergewichtsgründung zu installieren.

Gründungen von Offshore-Windenergieanlagen sind die auch als Substrukturen bezeichneten Verbindungskonstruktionen zwischen dem unteren Ende des Turms der Windenergieanlage und dem Seeboden, wo sie der Lasteinleitung dienen. Sie werden heute überwiegend als Monopile-Gründungen ausgeführt. Seltener, jedoch in nennenswerte Anzahl, kommen sog. Jacket-Gründungen zum Einsatz. Für einzelne Windparks wurden sog. Tripile- oder Tripot-Gründungen verwendet. Bei allen oben aufgeführten Gründungsvarianten erfolgt die Lasteinleitung in den Boden über Pfähle, die aus offenen Stahlrohren bestehen und in einem ersten Schritt des Installationsprozesses durch Rammen tief in den Untergrund eingebracht werden. Diese Art von Gründungen werden also mittels über die in den Meeresgrund eingerammten Pfähle oder ähnlichen Zugankerelemente am Grund fixiert, indem in den Pfählen oder den vergleichbaren Zugankerelemente Zugkräfte in die aufgehende Gründungsstruktur übertragen werden, die diese am Meeresgrund fixieren.

Die auf Höhe des Seebodens auftretenden Schnittmomente werden im Fall des Monopiles im Wesentlichen durch ein horizontales Kräftepaar in den Boden übertragen. Im Fall der übrigen Pfahlgründungen kommt für diesen Momentenabtrag jeweils ein vertikales Kräftepaar hinzu, sodass hier auf Höhe des Seebodens auch vertikale Zugkräfte auftreten. Weitere bekannte Varianten stellen sog. Suction-Bucket-Gründungen dar, bei denen bei der Installation unten offene und oben durch einen Deckel geschlossene, hohle Zylinder unter Nutzung von in dem Zylinder erzeugtem Unterdruck in den Boden eingebracht werden. Zu den Suction-Bucket Gründungen existieren die beiden Varianten der Multi-Bucket- und der Monobucket-Gründung. Auch bei den Suction-Bucket-Gründungen ist die Übertragung von Zugkräften in den Untergrund vorgesehen. Für große Momente wird dabei auch die Sogwirkung in Ansatz gebracht, die sich im Zusammenhang mit einer Aufwärtsbewegung einstellt.

Ein grundlegend anderes Gründungskonzept verfolgen die als Schwerkraft- oder Schwergewichtsgründungen bezeichneten Gründungen. Diese nutzen für eine ortsfeste und sichere Verankerung der Offshore-Windenergieanlage allein das auf dem Untergrund auflastende Gewicht, werden also durch einen durch die Auflast ausgelösten Andruck am Meeresgrund gehalten. Das hierfür benötigte Eigengewicht der Gesamtkonstruktion stammt zunächst aus der Windenergieanlage und der Substruktur selbst und wird in der Regel durch am Installationsort eingebrachten Ballast vergrößert. Mit einer Sohlfläche liegen diese Gründungen auf dem Meeresgrund auf, ohne über in den Meeresgrund getriebene Pfeiler oder dergleichen gegen ein zu verhinderndes Abheben verankert zu werden. Auch solche Gründungen wurden in der Vergangenheit mehrfach ausgeführt. Die planmäßige Sohlfläche ist dabei in der Regel zusammenhängend gestaltet. Sie kann jedoch auch in mehrere kleinere Sohlflächen aufgelöst sein. Da diese Gründungsvarianten auf dem Seeboden nur abgestellt werden, ist in der Regel eine entsprechende Vorbereitung der Sohlfläche erforderlich, um den Seeboden dort zu ebnen und für das Aufsetzen der Gründung haltbaren Seegrund freizulegen, d.h. oberste Schlickschichten, die keinen ausreichend stabilen Grund ergeben, abzutragen. Neben der Gründung auf dem Seeboden sind zur Ableitung der Anlagenlasten auch Varianten unter maßgeblicher Nutzung des Auftriebs bekannt. Hierzu gehören etwa schwimmende Windenergieanlagen, bei denen als Auftriebskörper z.B. ein Halbtaucher dienen kann.

Eine andere Form der Gründung kommt bei Hubinseln oder Installationsschiffen zum Einsatz. Diese heben sich selbst aus dem Wasser empor, wobei an ihrem unteren Ende in der Regel mit Aufweitungen (sogenannten Spudcans) versehene Beine in den Seeboden eingedrückt werden. Um einen sicheren Stand zu gewährleiten, wird dabei in einem Zwischenzustand, dem sogenannten Preloading, das gesamte Eigengewicht im Wesentlichen über nur zwei Beine in den Untergrund eingeleitet.

Die bisher bekannten Gründungen haben jeweils Nachteile, die zu überwinden sich die Erfinder zum Ziel gesetzt haben. So sind Rammarbeiten am Meeresgrund unter Umweltgesichtspunkten unerwünscht. Die Rammgeräusche beeinträchtigen als Lärmverschmutzung Meeresbewohner, insbesondere die Meeressäugetiere wie Wale und Delphine. Auch sind in den Meeresgrund gerammte Pfähle nur mit viel Aufwand, bisweilen auch überhaupt nicht, wieder aufzunehmen, was im Hinblick auf die heute geforderte Rückbaubarkeit der Gründung problematisch ist. Auch erfolgt die Installation entsprechend im Untergrund verankerter Gründungsstrukturen stets in mehreren Schritten, was mit erheblichen Kosten verbunden ist.

Heute bekannte Schwergewichtsgründungen erfordern, wie bereits ausgeführt, auch und insbesondere aufgrund ihrer ausgedehnten Sohlflächen umfangreiche Vorbereitungen des Aufstellorts durch unter Wasser auszuführende Arbeiten. Insbesondere muss - in der Regel großflächig - eine oberste Schicht des Meeresbodens, eine Schlamm- bzw. Schlickschicht entfernt werden, bis zum verdichteten Meeresboden (typischerweise verdichteter Sand). Letzterer wird dann regelmäßig noch eingeebnet, um eine gerade Aufstellung der Gründung zu erhalten. Alternativ werden Zwischenschichten eingebracht, die ggf. ebenfalls geebnet werden müssen. Solche Arbeiten zum Vorbereiten einer "Baugrube" offshore und unter Wasser sind nicht nur kostspielig, sondern beanspruchen auch wertvolle Projektzeit. Denn solche Arbeiten können in der Regel nur bei gutem Wetter und ruhiger See durchgeführt werden, was einerseits überhaupt nur ausgesuchte Zeitfenster zu günstigen Jahreszeiten eröffnet, andererseits häufig ein Warten auf passende Bedingungen erfordert.

Schwimmgründungen, die nur im Meeresgrund verankert werden, sind nicht für jeden Aufstellungsort geeignet. Sie bergen stets die Gefahr, dass sich die so gegründete Windenergieanlage bei widrigen Verhältnissen, wie etwa starkem Sturm und/oder hohem Seegang, mit dem Tauchkörper von einer (oder mehreren) Ankerkette(n) losreißt und dann abdriftet. Die dauerhaft gebundenen und zu unterhaltenden Schwimmkörper sowie ihre Verankerungssysteme verursachen außerdem hohe Kosten und die unvermeidbaren Bewegungen können für den Betrieb der Anlage problematisch sein.

Gebräuchliche Installationsverfahren erfordern eine Vielzahl von Arbeitsschritten, die jeweils mit Kosten und Zeiteinsatz verbunden sind. Hierzu gehören ggf. das Rammen der Pfähle, das Aufstellen der Gründung, ggf. das Einbringen von Ballast, die Montage der Windenergieanlage mit Turm, Gondel und Rotorblättern auf See, das kraftschlüssige Verbinden der einzelnen Bauteile, Verkabelungsarbeiten sowie die Inbetriebnahme der Windenergieanlage und Ausbesserungsarbeiten. Bei vielen Installationskonzepten kommt die Anforderung hinzu, dass die verwendeten Bauteile gewisse Massen nicht überschreiten dürfen, um durch verfügbare Gerätschaften unter erträglichen Kosten transportiert und installiert werden zu können. Dies erfordert in vielen Fällen den Einsatz vergleichsweise leichter und robuster Stahlstrukturen, die jedoch in der Herstellung etwa im Vergleich zu Betonstrukturen kostenintensiver sind.

Vor diesem Hintergrund ist es daher Aufgabe der Erfindung, eine alternative Gründung anzugeben, die die Nachteile der bekannten Gründungen überkommt und ein festes und sicheres Aufstellen einer Offshore-Windenergieanlage erlaubt, bei zugleich kostengünstiger Herstellung und Aufstellung der Gründung. Auch ein Verfahren zum Aufstellen eine Offshore-Windenergieanlage, das sich einer solchen neuartigen Gründung bedient und durch sie ermöglicht wird, soll angegeben werden.

Diese Aufgabe wird erfindungsgemäß gelöst durch eine Schwergewichtsgründung mit den Merkmalen des Anspruchs 1. Vorteilhafte Weiterbildungen der erfindungsgemäßen Gründung sind in den Unteransprüchen 2 bis 16 angegeben. Weiterhin stellt auch ein Verfahren zum Aufstellen einer Offshore-Windenergieanlage mit den Merkmalen des Anspruchs 17 eine Lösung der vorstehenden Aufgabe dar. Vorteilhafte Weiterbildungen des Verfahrens sind in den Ansprüchen 18 bis 20 angeben.

Erfindungsgemäß handelt es sich bei der Gründung um eine Schwergewichtsgründung, also eine solche, die nicht mit eingebrachten Zugkräften, insbesondere mittels Rammpfählen oder dergleichen Zugankerelementen, im Untergrund verankert wird. Die erfindungsgemäße Schwerkraftgründung für eine Offshore-Windenergieanlage hat:
- ein Anschluss- und Übergangsstück, zum Verbinden mit einem Turmabschnitt der Windenergieanlage,
- einen dem Anschluss- und Übergangsstück in einer vertikalen Richtung gegenüberliegenden, unterhalb desselben angeordneten Auflagerabschnitt und
- einen Zwischenabschnitt, der sich in vertikaler Richtung erstreckt und das Anschluss- und Übergangsstück mit dem Auflagerabschnitt verbindet,
wobei der Auflagerabschnitt in einer Querrichtung, quer, insbesondere senkrecht, zu der vertikalen Richtung eine größere Ausdehnung hat als das Anschluss- und Übergangsstück. Dabei zeichnet sich die erfindungsgemäße Gründung dadurch aus, dass der Zwischenabschnitt in einer Fachwerkbauweise mit Pfeiler- und Strebenelementen gebildet ist, dass ein maximaler Abstand eines Endpunktes des Auflagerabschnittes von einer durch eine Verlängerung einer Turmlängsachse einer auf die Gründung aufzusetzenden und mit dem Anschluss- und Übergangsstück zu verbindenden Windenergieanlage bestimmten vertikalen Mittelachse der Gründung wenigstens das Siebenfache, insbesondere wenigstens das Neunfache, des Radius des Anschluss- und Übergangsstücks an einer Verbindungsstelle zum Verbinden mit einem Turmabschnitt der Windenergieanlage beträgt und dass an dem Auflagerabschnitt in maximal von der vertikalen Mittelachse der Gründung beabstandeten Bereichen vertikal über den Auflagerabschnitt, genauer über eine horizontale Unterkante desselben, nach unten vorstehende Stützelemente angeordnet sind, die an ihren unteren Enden Sohlflächen zum Aufstellen der Schwerkraftgründung auf einem Untergrund ausbilden. Diese Sohlflächen an den unteren Enden der Stützelemente bilden die einzigen Aufstellflächen, mit denen die erfindungsgemäße Schwergewichtsgründung auf dem Seegrund auflastet. Insbesondere sind die Stützelemente mit Vorteil an dem Auflagerabschnitt in maximal von der vertikalen Mittelachse der Gründung beabstandeten Bereichen in den Auflagerabschnitt eingespannt. Sie können an ihren unteren Enden sich dort anschließende Gründungskörper aufweisen und durchdringen im aufgestellten Zustand der Gründung mit diesen den Seeboden vertikal zur punktförmigen Lasteinleitung in den Untergrund. Die Sohlflächen sind dann an den Gründungskörpern gebildet. Die Gründungsstruktur kann in einer vorteilhaften Ausgestaltung einschließlich ihrer Stützelemente und Gründungskörper an Land in einem Stück gefertigt werden und am vorgesehenen Aufstellungsort offshore im Wesentlichen als ein zusammenhängendes Bauwerk abgestellt bzw. in den Untergrund eingedrückt werden.

Die Richtungsbegriffe "unten", "unterhalb" bzw. "oben" oder "oberhalb", wie sie in der vorliegenden Beschreibung und Anspruchsformulierung in Bezug auf bekannte Gründungen sowie - insbesondere - auch auf die erfindungsgemäße Schwergewichtsgründung verwendet werden, beziehen sich stets auf vertikale Richtungen und Positionen, wie sie in einem auf dem Meeresgrund abgesetzten bzw. an einem Aufstellungsort errichteten Zustand der Gründung gegeben sind, in dem an einem oberen Ende der Gründung die Windenergieanlagen aufgesetzt wird.

Die vorgeschlagene Schwergewichtsgründung zeichnet sich aus durch eine an sich schwere und breite Konstruktion einer unterhalb des Turms der Windenergieanlage und auch unterhalb der Wasserlinie gelegenen Substruktur, insbesondere im Auflagerabschnitt. Dabei erfolgt allerdings im Unterschied zu üblichen Schwergewichtsgründungen die Lasteinleitung in den Boden gezielt punktuell über die in ihren Durchmessern verglichen mit der Horizontalausdehnung des Auflagerabschnitts deutlich kleiner gebildeten Sohlflächen der Stützelemente, die an mehreren, vorzugsweise drei, Stellen mit vergleichsweise großem Abstand (nämlich vorzugsweise dem mindestens Siebenfachen des Radius des Anschluss- und Übergangsstücks an der Verbindungsstelle zu dem Turmabschnitt einer mit der Schwergewichtsgründung zu verbindenden Windenergieanlage) zur vertikalen Mittelachse, aber auch mit vergleichsweise großem Abstand zu benachbarten Stützelementen, erfolgt. Dabei kann ein Verhältnis der Summe der Flächeninhalte aller an den Enden der Stützelemente gebildeten Sohlflächen zu dem Flächeninhalt einer von einer äußerste Punkte jeweils benachbarter Sohlflächen auf kürzestem Wege verbindenden Umfangslinie eingeschlossenen Grundfläche insbesondere maximal 1/15, insbesondere maximal 1/20, vorzugsweise maximal 1/30 betragen. Typische bekannte Schwergewichtsgründungen haben Auflagerabschnitte mit deutlich geringeren Dimensionen quer zur vertikalen Mittelachse und liegen auf weitaus größeren Auflageflächen auf, haben entsprechend größere, und in der Regel einheitlich zusammenhängende Sohlflächen. Dabei sind unter den an den Enden der Stützelemente gebildeten Sohlflächen diejenigen Flächen zu verstehen, die die Flächen zum Aufstellen der Schwerkraftgründung auf einem Untergrund ausbilden. Dabei können die Sohlflächen entweder direkt an einem unteren Ende der Stützelemente gebildet sein oder aber auch an einem unteren Ende einer dort an dem Stützelement noch zusätzlich gebildeten oder angeformten Struktur.

Bevorzugt kann bei der erfindungsgemäßen Schwergewichtsgründung ein Verhältnis einer Masse der Schwergewichtsgründung zu dem Flächeninhalt einer von einer äußerste Punkte jeweils benachbarter Sohlflächen auf kürzestem Wege verbindenden Umfangslinie eingeschlossenen Grundfläche zwischen 1 und 10 t/m² (Tonnen pro Quadratmeter), insbesondere zwischen 2 und 6 t/m², betragen. Die erfindungsgemäße Schwergewichtsgründung kann aufgrund Ihrer Konstruktion ein geringeres Gewicht (d.h. eine geringere Masse) als herkömmliche Schwergewichtsgründungen, aber ein weiterhin noch höheres Gewicht als Gründungen, die auf Zuglasteinleitung in den Untergrund basieren, und zugleich einen großen Flächeninhalt einer von einer die äußersten Punkte jeweils benachbarter Sohlflächen auf kürzestem Wege verbindenden Umfangslinie eingeschlossenen Grundfläche aufweisen, der größer ist als bei herkömmlichen Schwergewichtsgründungen. Das oben genannte Verhältnis bildet diese Besonderheit in der erfindungsgemäßen Konstruktion ab. Sie hat zur Folge, dass eine erfindungsgemäße Schwergewichtsgründung trotz geringerem Gewicht und geringer Gesamtfläche der einzelnen weit beabstandeten Auflastflächen/Sohlflächen stabil und sicher auf dem Untergrund liegen kann.

Bevorzugt kann bei der erfindungsgemäßen Schwergewichtsgründung ein Verhältnis einer Masse der Schwergewichtsgründung zu der Summe der Flächeninhalte aller an den Enden der Stützelemente gebildeten Sohlflächen zwischen 20 und 500 in t/m² (Tonnen pro Quadratmeter) betragen. Die erfindungsgemäße Schwergewichtsgründung kann aufgrund ihrer Konstruktion ein geringeres Gewicht (eine geringere Masse) als herkömmliche Schwergewichtsgründungen, aber höheres Gewicht als Gründungen, die auf Zuglasteinleitung in den Untergrund basieren, und zugleich eine Summe der Flächeninhalte aller an den Enden der Stützelemente gebildeten Sohlflächen aufweisen, die kleiner ist als bei herkömmlichen Schwergewichtsgründungen. Das oben genannte Verhältnis bildet diese Besonderheit in der erfindungsgemäßen Konstruktion ab. Sie hat zur Folge, dass eine erfindungsgemäße Schwergewichtsgründung trotz geringerem Gewicht und geringer Gesamtfläche der einzelnen Auflastflächen/Sohlflächen stabil und sicher auf dem Untergrund liegen kann.

Ein Maß für einen sicheren Stand eines Bauwerks oder Objekts kann durch die erste Kernfläche gegeben werden. Dabei ist die erste Kernfläche einer zusammenhängenden oder nicht zusammenhängenden Sohlfläche die Menge aller Punkte auf einer horizontalen Ebene, in denen angreifend eine auf das Objekt einwirkende Vertikalkraft an allen Punkten der Sohlfläche (senkrecht zu dieser) Druckspannungen (nicht null, keine Zugspannungen) hervorruft. Dabei wird vorausgesetzt, dass sich der Untergrund überall linear elastisch verhält und überall die gleiche Steifigkeit besitzt (also eine sogenannte linear elastische Bettung aufweist). Veranschaulicht bedeutet dies, dass ein gewichtsloses Tragwerk mit einer zusammenhängenden oder auch nicht zusammenhängenden Sohlfläche alleine durch eine zum Sohlflächenschwerpunkt exzentrische Vertikalkraft belastet sei und linear elastisch gebettet ist. Eine klaffende Fuge, d.h. eine Teilregion der Sohlfläche, die nicht überdrückt ist, tritt genau dann auf, wenn die Wirkungslinie der Vertikalkraft die erste Kernfläche nicht schneidet.

Mit Vorteil kann bei einer erfindungsgemäßen Schwergewichtsgründung ein Verhältnis einer ersten Kernfläche der Sohlflächen zu dem Flächeninhalt einer von einer äußerste Punkte jeweils benachbarter Sohlflächen auf kürzestem Wege verbindenden Umfangslinie eingeschlossenen Grundfläche zwischen 0,5 und 1,0, mit Vorzug zwischen 0,7 und 1,0, betragen. Aufgrund der erfindungsgemäßen Konstruktion der Schwergewichtsgründung ist demnach die erste Kernfläche der Schwergewichtsgründung in etwa so groß wie eine Fläche, die durch alle Stützpunkte und deren Sohlflächen aufgespannt wird, nämlich die Umfangsfläche also der Flächeninhalt einer von einer die äußersten Punkte der jeweils benachbarter Sohlflächen auf kürzestem Wege verbindenden Umfangslinie eingeschlossenen Grundfläche. Bei herkömmlichen Schwergewichtsgründungen, die meist eine einzige und in sich geschlossene kreisförmige Sohfläche und somit eine Umfangsfläche mit einem ersten Durchmesser aufweisen, ist die erste Kernfläche dieser Schwergewichtsgründung eine Kreisfläche mit einem Durchmesser, der nur ¼ des Durchmessers der Umfangsfläche beträgt. Dieser signifikante Unterschied zwischen der erfindungsgemäßen Schwergewichtsgründung und herkömmlichen Schwergewichtsgründungen lässt sich besonders gut durch das oben genannte Verhältnis darstellen, welches die Besonderheit der Konstruktion der erfindungsgemäßen Schwergewichtsgründung wiedergibt.

Mit Vorteil kann bei einer erfindungsgemäßen Schwergewichtsgründung ein Verhältnis einer Masse der Schwergewichtsgründung zu einer ersten Kernfläche der Sohlflächen zwischen 1 und 10 t/m², insbesondere zwischen 2 und 6 t/m², betragen. Aufgrund der Konstruktion der erfindungsgemäßen Schwergewichtsgründung kann insbesondere ein solches vorteilhaftes Verhältnis verwirklicht werden, da die Masse im Verhältnis zur ersten Kernfläche im Vergleich zu herkömmlichen Schwergewichtsgründungen relativ klein ist, bzw. die erste Kernfläche relativ zur Masse im Vergleich zu herkömmlichen Gründungen relativ groß ist. Durch eine solche Ausgestaltung der Dimensionen der Konstruktion der erfindungsgemäßen Schwergewichtsgründung mit solchen Verhältnissen wird eine besonders sichere Gründung einfach herstellbar und installierbar.

Beispielsweise kann der maximale Abstand eines Endpunktes des Auflagerabschnittes von der vertikalen Mittelachse wenigstens 25 m betragen, insbesondere kann er zwischen 30 und 50 m liegen. Durch diese relative weite horizontale Bemessung des Auflagerabschnittes und den zur vertikalen Mittelachse relativ weit beabstandeten Endpunkten des Auflagerabstandes, wird eine besonders sichere und stabile und zugleich relativ leichte und somit kostengünstige (sowohl in der Herstellung aber besonders auch in der Installation) erfindungsgemäße Schwergewichtsgründung möglich.

Beispielsweise können die Stützelemente einen Umfangsdurchmesser von zwischen 1 und 5 m, insbesondere von 2 bis 4 m, aufweisen. Solche Umfangsdurchmesser sind dabei vorteilhaft zur Herstellung von stabilen Stützelementen, welche zugleich allerdings auch aufgrund des nicht zu großen Umfangsdurchmessers ebenso kostengünstig ist.

Mit Vorzug können die Stützelemente an ihren freien Enden Gründungskörper aufweisen, wobei die Gründungskörper beispielsweise einen Durchmesser von 4 bis 9 m, insbesondere von 5 bis 7 m, aufweisen können. Die Dimension der Gründungskörper erlaubt es zum einen einen nur punktuellen Auflastpunkt, der somit nur gering in den Untergrund eindringt und diesen beeinträchtigen mag, der aber zugleich stabil ist, um eine sichere und stabile Schwergewichtsgründung zu ermöglichen. Wenn die Stützelemente an ihren freien Enden Gründungskörper aufweisen, so sind die Sohlflächen an den vertikal unteren Enden dieser Strukturen ausgebildet.

Auch die Durchdringung des Seebodens erfolgt bei der erfindungsgemäßen Gründung dann nur punktuell an den Stellen, an denen die Stützelemente angeordnet sind und die Sohlflächen ausbilden, also vorzugsweise an drei Stellen.

Denn nur die einen vergleichsweise geringen Durchmesser aufweisenden bzw. mit vergleichsweise kleinen Sohlflächen versehenen Stützelemente dringen in den Seeboden ein, der in der Horizontalausdehnung weitaus größere Auflagerabschnitt bleibt oberhalb des Seebodens. Entsprechend werden die Stützelemente so gebildet, dass sie mit einer ausreichenden Baulänge nach unten über den Auflagerabschnitt vorstehen. So können die Stützelemente von der Unterkante des Auflagerabschnitts abwärts gemessen eine Länge von 3 bis 15 m, insbesondere von 5 bis 10 m aufweisen. Dabei sind die Stützelemente vergleichsweise schmal gebaut (haben vorzugsweise wie erwähnt beispielsweise Durchmesser von nur 1 bis 5 m, insbesondere von 2 bis 4 m), wobei ggf. an den unteren, freien Enden der Stützelemente angeordnete Gründungskörper einen etwas vergrößerten Durchmesser aufweisen können, z.B. wie erwähnt 4 bis 9 m, vorzugsweise 5 bis 7 m. Durch diese im Vergleich zu den Dimensionen des Auflagerabschnittes, bei dem Endpunkte, in deren Bereich jeweils die Stützelemente angeordnet sind, von der vertikalen Mittelachse mindestens 25 m, insbesondere zwischen 30 und 50 m beabstandet liegen können, geringen Abmessungen können beim Aufstellen der Gründung die dann stark gewichtsbelasteten Stützelemente eigenständig und ohne erforderliche Vorbereitungen in einer Unterwasserbaugrube die instabile obere Schicht des Meeresgrundes, die sog. Schlick- oder Schlammzone (mud zone) sowie weitere weniger dicht gelagerte und daher weniger tragfähige Bodenschichten durchdringen, bis sie auf darunter liegendem dichter gelagerten Boden festen Grund vorfinden. Erforderlichenfalls können im Bereich der Sohlflächen der Stützelemente, insbesondere in den optional anzubringenden Gründungskörpern, Düsen, insbesondere solche nach Art von sogenannten Spudcans, vorgesehen sein, durch die Wasser ausströmen gelassen werden kann, um durch Wegspülen von instabilem Grund das Aufsetzen bis auf den festen Untergrund zu fördern. Jedenfalls erlaubt diese Bauweise, dass die erfindungsgemäße Gründung ohne Präparation des Seebodens an dem Aufstellungsort abgesetzt und aufgestellt werden kann, was nicht nur die kostspieligen Aushubarbeiten vermeidet, sondern insbesondere die Abhängigkeit von Wetter- und Seelagen deutlich verringert und die Errichtungszeit verkürzt. Auch entfallen, dadurch, dass die erfindungsgemäße Gründung als Schwergewichtsgründung ausgebildet ist, die für mit Zuglasten zu verankernde Gründungen erforderlichen Gründungspfähle und damit in Verbindung stehende lärmintensive Rammarbeiten.

Die vorstehend angegebenen Dimensionen für die Abmessungen der Stützelemente und des Auflagerabschnittes basieren auf den typischen Dimensionen (Turmhöhe, Turmdurchmesser und auch Rotordurchmesser) der aktuell offshore aufgestellten Windenergieanlagen. Zum Beispiel kann eine an einem typischen Aufstellungsort in der deutschen Bucht aufgestellte Offshore Windenergieanlage, die bei einer Wassertiefe von ca. 40 m bspw. eine Höhe der Rotornabe von 150 m über dem Seeboden aufweist (dies sind typische Maße für heutige Offshore Windenergieanlagen mit einer Nennleistung von 6 MW) mit einer erfindungsgemäßen Schwergewichtsgründung mit folgenden Parametern gegründet werden: Der Zwischenabschnitt kann eine vertikale Ausdehnung von 20 m über und 20 m unter der Wasseroberfläche aufweisen, wobei der gegenseitige Abstand der Stützelemente zueinander jeweils 65 m bzw. der Abstand der Stützelemente zu der vertikalen Mittelachse 37 m und der Durchmesser des Gründungskörpers 5 m betragen kann. Die Masse der Gründungsstruktur kann dabei 6000 t betragen, wobei weder der Auftrieb durch das Seewasser noch die Windenergieanlage selbst dabei zur Massebestimmung berücksichtigt wurden (also die Masse der Schwergewichtsgründung an Land darstellt), und die Bauweise der Schwergewichtsgründung Stahl- bzw. Spannbeton ist mit Ausnahme der Diagonalstreben, welche in Stahlbauweise ausgestaltet sein können. Für den Transport kann dann ein Halbtaucher in verwendet werden, der einen gegenseitigen Abstand der vertikalen Achsen der Zylinder von 80 m aufweisen kann, wobei die Zylinder einen Durchmesser von 14 m haben können. Wenn, was zu erwarten steht, diese Windenergieanlagen mit größeren Dimensionen ausgelegt werden, so wird der Fachmann auch die Abmessungen der Gründung, insbesondere der Stützelemente und des Auflagerabschnittes entsprechend anpassen (größer wählen) müssen.

Ein weiterer wesentlicher Aspekt der erfindungsgemäßen Lösung ist darin zu sehen, dass in dem Zwischenabschnitt eine Fachwerkbauweise zum Einsatz kommt. Durch diese gegenüber bei bekannten Schwergewichtsgründungen eingesetzten massiven Konstruktionen vergleichsweise filigrane Bauform bietet die erfindungsgemäße Schwergewichtsgründung - vor allem in den vom Seegang beeinflussten Wasserzonen - wenig Widerstand, der zum Auftreten von weiteren mit der Gründung abzufangenden Querkräften führen würde. Dennoch kann, und wird dies in der Regel, auch in diesem Bereich durch den Einsatz von Pfeiler- und Strebenelementen aus Material von hohem spezifischen Gewicht, z.B. aus Stahl- oder Spannbeton, ausreichend Masse aufgebracht werden für die Schwerkraft getriebene Auflagerung der erfindungsgemäßen Schwergewichtsgründung. So kann ein ausreichendes Eigengewicht erhalten werden, ist eine weitere Fixierung durch Zugkräfte mittels Zugankerelementen und sind die damit verbundenen Rammarbeiten zum Fixieren der Gründung am Seeboden nicht erforderlich, so dass die mit dieser Gründungsweise verbundenen Nachteile vermieden werden können. Bei in Fachwerkbauweise errichteten mit Zugkräften am Meeresgrund zu verankernden Gründungen ist eine solche Fachwerkstruktur typischerweise aus leichteren Stahlbauelementen gebildet, kann dadurch kein für eine reine Schwergewichtsgründung ausreichendes Eigengewicht der Gründung beisteuern.

Ein Grundgedanke bei der erfindungsgemäßen Gründung liegt in dem Verfolgen des Prinzips der Vermeidung von abhebenden Kräften am Anschluss an den Boden sowie allgemein von größeren Zugkräften in der aufgehenden Struktur (entsprechend dem Prinzip der Schwergewichtsgründung) bei gleichzeitiger Vermeidung allzu hohen Materialeinsatzes sowie auch einer Ballastierung. Zugleich wird der Zwischenabschnitt - zumindest in Teilen - in einer Fachwerkstruktur realisiert, um eine große globale Steifigkeit unter Hervorrufung vergleichsweise geringer Wellenangriffskräfte zu erhalten. Um beides zu erreichen, wird das eingesetzte Material dafür verwendet, den Auflagerabschnitt als vergleichsweise breiten Sockel der Tragstruktur auszubilden. Hierbei kommt, wie bereits erwähnt, bevorzugt in weiten Teilen, insbesondere mindestens von dem Auflagerabschnitt (einschließlich) abwärts, also inklusive der Stützelemente und etwaiger daran angeordneter Gründungskörper, die Stahlbeton- bzw. Spannbetonbauweise zum Einsatz, die sich dafür sowohl aus Kostengründen sowie wegen des dafür typischen hohen Eigengewichts eignet.

Das verwendete Konstruktionsprinzip sieht vor, dass das vornehmlich verwendete Baumaterial Stahlbeton dafür eingesetzt wird, die Tragstruktur insbesondere in dem Anschluss- und Übergangsstück und Auflagerabschnitt von oben nach unten aufzuweiten und die zu übertragenden Lasten schließlich an wenigen, vorzugsweise drei Punkten über die Stützelemente, die wie Einzelfundamente wirken, in den Untergrund einzuleiten. U.a. durch die Verwendung einer fachwerkartigen Konstruktionsweise wird dabei auf einen mäßigen Materialeinsatz sowie auf die Generierung mäßiger Horizontallasten infolge Angriffs von Wellen und Strömung geachtet. Im Entwurfsprozess wird durch einen sukzessive gesteigerten Materialeinsatz die Gesamtbreite der Gründungsstruktur auf Höhe der Sohlflächen (gegenseitiger Abstand der Stützelemente) und damit zugleich auch das Eigengewicht der Gesamtstruktur so lange vergrößert, bis das Prinzip der Schwergewichtsgründung gerade ausreichend sicher verwirklicht ist. Die große Breite des Auflagerabschnittes führt gemeinsam mit dem mäßigen Eigengewicht zu vergleichsweise geringen Lagerreaktionen infolge von Bemessungslastzuständen (geringe Vertikalkräfte aus maximalen und wechselnden globalen Momenten), weswegen vergleichsweise kleine Sohlflächen der Stützelemente zum Lastabtrag in den Boden ausreichen. Dies wirkt sich unter anderem - wie vorstehend erläutert - bei der Installation günstig aus.

Bevorzugt können die Pfeiler- und/oder Strebenelemente aus Beton, insbesondere aus Stahl- oder Spannbeton gebildet sein.

Weiterhin bezeichnend für die erfindungsgemäße Konstruktion ist, dass die Pfeiler des Zwischenabschnitts und auch die Stützen zu den Gründungskörpern durch die umliegenden Abschnitte (Anschluss- und Übergangsstück und Auflagerabschnitt) eingespannt werden. Ermöglicht wird dies durch die Unterteilung in vergleichsweise gedrungen und massereich gebildete Abschnitte in Form des Anschluss- und Übergangsstücks und des Auflagerabschnitts und eine filigrane Konstruktion in den Bereichen der Grenzflächen Luft-Wasser (in dem Zwischenabschnitt) bzw. Wasser-Boden (mit den Stützelementen). Diese Aufteilung in die vergleichsweise massehaltigen und verwindungssteifen einspannenden Teile der Konstruktion und der filigraneren eingespannten Teile erlaubt gerade die Ausbildung derjenigen Elemente (des Zwischenstücks und der Stützelemente) in filigraner und vergleichsweise leichter Bauweise, ohne dass diese die Fähigkeit verlieren würden, die auflastenden Lasten sicher abzuleiten. Auch wird so erreicht, dass die erfindungsgemäße Gründung nach dem Prinzip der Schwergewichtsgründung funktioniert, dass keine Maßnahmen vorgesehen werden müssen, um etwa abhebende Zugkräfte zu kompensieren, wie insbesondere das Einbringen von tief in den Untergrund gerammten Haltepfählen oder dergleichen. Die gedrungenere und massereichere Bauweise des Auflagerabschnitts im Vergleich zum Zwischenabschnitt kann, wenn auch der Auflagerabschnitt fachwerkartig aus Streben errichtet ist, insbesondere dadurch erhalten werden, dass dort verbaute Streben einen mit den Streben und Pfeilern in dem Zwischenabschnitt deutlich größeren Durchmesser aufweisen. So kann hier zumindest ein Teil der Streben des Auflagerabschnitts jeweils einen mindestens doppelt so großen, ggf. sogar dreimal so großen oder noch größeren Durchmesser aufweisen als Streben und Pfeiler des Zwischenabschnitts.

Dabei ist aber, indem der Auflagerabschnitt vorzugsweise ebenfalls in einer aus Streben gebildeten Fachwerkstruktur konstruiert ist, weiterhin auch in diesem Abschnitt eine möglichst geringe Angriffsfläche gegen Horizontalkräfte (-kraftkomponenten) gegeben, wie sie z.B. durch auch in diesem Bereich auftretende Strömungen verursacht werden können. Die in diesem Abschnitt, insbesondere durch die Wahl von Stahl- oder Spannbeton als Material, verbaute Masse ist demnach zwar ausreichend groß gewählt, um eine Gründung nach dem Prinzip der Schwergewichtsgründung zu erhalten, zugleich aber auch insoweit gering gehalten, dass weiterhin eine Bauweise mit vergleichsweise geringer Angriffsfläche erhalten wird, dass zudem ein Transport der Gründung insgesamt sowohl an Land als auch im Wasser weiterhin mit klar beherrschbaren Mitteln möglich ist. Durch die weit gespannte Aufstandsfläche kann auch bei vergleichsweise filigraner Bauweise ein ausreichendes Gesamtgewicht der Gründungskonstruktion erhalten werden, um diese - jedenfalls mit der aufgesetzten Windenergieanlage - allein durch das auflastende Gewicht sicher am Seeboden zu verankern. Einerseits kann dabei nämlich die für das Ausbilden der erforderlichen Auflast nötige Masse in einem größeren umspannten Volumen verbaut werden. Andererseits bietet die vergrößerte Aufstandsfläche (also eine in einer um die äußeren Grenzen der Sohlflächen gezogenen, diese auf kürzestem Wege verbindenden Umfangslinie eingeschlossene Fläche) einen verbesserte Halt gegen Querlasten (Kippmomente) im Vergleich zu den bekannten Schwergewichtsgründungen mit vergleichsweise wenig ausladenden Aufstandsflächen.

Die Konstruktion der Gründung folgt in unterschiedlichen Höhenbereichen insbesondere unterschiedlichen Prinzipien. Insbesondere weitet sich die Gründung in vertikaler Verlaufsrichtung schrittweise nach unten hin auf ausgehend von einer Breite des Anschluss- und Übergangsstücks am Turmanschluss (also in etwa entsprechend der Fußbreite eines aufzunehmenden Turms) bis hin zu dem deutlich breiter gebildeten Auflagerabschnitt.

Dabei kann der Zwischenabschnitt insbesondere sich an das Anschluss- und Übergangsstück vertikal nach unten anschließen mit einer in Richtung quer, insbesondere senkrecht, zu der vertikalen Mittelachse gemessene Baubreite, die im Wesentlichen gleichbleibend ist, kann erst in dem Auflagerabschnitt, der sich an den Zwischenabschnitt vertikal unterhalb desselben anschließt ein Übergang und eine weitere Verbreiterung der Gründung bis auf die maximale Baubreite des Auflagerabschnitts an einer Unterkante desselben geschaffen werden.

Vorteilhafterweise kann der Zwischenabschnitt eine solche Länge und Bauhöhe aufweisen, dass er bei an einem Aufstellungsort aufgestellter Gründung zum Teil oberhalb, zum Teil unterhalb der Wasseroberfläche liegt. Mit weiterem Vorzug kann der Zwischenabschnitt eine solche Länge und Bauhöhe aufweisen, dass er sich bei an einem Aufstellungsort aufgestellter Gründung entlang eines Bereichs erstreckt, in dem hohe Wellenlasten zu erwarten sind.

Beispielsweise kann der Auflagerabschnitt eine solche Lage und Bauhöhe aufweisen, dass er bei an einem Aufstellungsort aufgestellter Gründung vollständig unterhalb der Wasseroberfläche liegt.

Die unterschiedlichen Abschnitte liegen dabei in verschiedenen Zonen. Der Zwischenabschnitt liegt in einer Zone, in der die größten Wellenlasten auftreten, weshalb dieser erste Zwischenabschnitt in einer noch vergleichsweise schmal und filigran gebildeten Fachwerkbauweise gebildet ist, so den Wellenlasten möglichst wenig Angriffsfläche bietet. In einer Zone in einem Bereich größerer Wassertiefe, jedoch noch einige Meter oberhalb des Seebodens, in der gegenüber der darüber liegenden Zone deutlich geringere Wellenlasten auftreten, ist der Auflagerabschnitt angeordnet, in dem die weitere Aufweitung der Konstruktion der Gründung bis zur Breite des Auflagerabschnitts an seiner Unterkante vollzogen wird. In einer weiteren, vertikal darunter liegenden Zone, die den Bereich von einigen Metern oberhalb des Seebodens bis zur Unterkante der Substruktur in einigen Metern unterhalb des Seebodens (innerhalb eines Bereichs von Schlick- und geringer verdichteten Bodenschichten mit geringerer Tragfähigkeiten, im Übergang zu einem festen Untergrund) beschreibt, befinden sich dann die Stützelemente, die die Schlickzone durchdringen und so in den Seeboden hineinragen bis zu einem festen Grund.

Auf eine Ballastierung kann bei der erfindungsgemäßen Schwergewichtsgründung verzichtet werden, da sie sich aufgrund der erfindungsgemäßen Bauweise durch ein ausreichendes Eigengewicht und eine breite Aufstandsfläche auszeichnet, welche Eigenschaften in Kombination eine sichere Gründung gewährleisten. Es kann aber im Rahmen der Erfindung gleichwohl eine gewisse Ballastierung zum Einsatz kommen.

Bevorzugt können die Stützelemente in den Auflagerabschnitt eingespannt sein. Sie werden dann durch ihre feste Verbindung mit dem Auflagerabschnitt am Verdrehen gehindert. Hierdurch erübrigt sich die Notwendigkeit, ein Verdrehen der Stützelemente und der Gründungskörper durch deren breite Ausbildung oder ihr tiefes Einbinden in den Untergrund zu verhindern. Die Einleitung der vertikalen und horizontalen Lasten in den Untergrund kann dann auch insofern als punktförmig bezeichnet werden. Zudem können die Stützelemente und im Wesentlichen auch die Gründungskörper bereits bei der Herstellung an Land fest mit der aufgehenden Gründungsstruktur verbunden werden. Die Herstellung einer kraftschlüssigen Verbindung zwischen elementaren lastübertragenden Strukturteilen bei der Installation kann somit entfallen.

Ein weiterer Vorteil und Aspekt der erfindungsgemäßen Konstruktion liegt darin, dass in die Lagerpunkte der Schwergewichtsgründung (an den Stützelementen) eine Lasteinleitung nicht allein von unten, also von deren Sohlflächen her, erfolgen kann, sondern auch von oben. Denn die Lagerpunkte ragen in horizontaler Richtung so weit nach außen über die aufsteigende Struktur hinaus, dass für eine Lasteinleitung von oben dort Anschlagmitteln für z.B. das Anschlagen von Hubvorrichtungen von z.B. Kranen vorgesehen werden können. So können in Zwischenzuständen bei Transport und Installation der erfindungsgemäßen Schwergewichtsgründung entsprechende Anschläge und Lasteinleitungen auch von oben erfolgen. Hierbei wirkt sich insbesondere günstig aus, dass entsprechende Anschlagpunkte zum Anheben von oben in einer vergleichsweise geringen Höhe über der Unterkante der Substruktur angeordnet sind, so dass das Anheben mit Hebemitteln vergleichsweise geringer Bauhöhe erfolgen kann. Für die im Wasser befindliche Substruktur wird durch den gleichen Umstand ihr unter einem Schwimmkörper hängender Transport bei beschränkter Wassertiefe ermöglicht. Auch begünstigt die räumliche Nähe des Lasteinleitungspunkts an einem oberen Ende der jeweiligen Stütze zu der Sohlfläche auf der Unterseite der Stütze bzw. eines an deren freien Ende angeordneten Gründungskörpers sowie deren zueinander lotrechte Anordnung die Übertragung einer großen Auflast für ein Eindrücken des Gründungskörpers in die instabilen oder semistabilen Schichten des Seebodens bis zu einer festen Auflageschicht.

Vorstehend und auch nachstehend anhand der Ausführungsbeispiele beschrieben werden also eine neuartige Variante einer Schwergewichtsgründung sowie zugehörige Installationsprozeduren. Schwergewichtsgründung und Installationsverfahren bauen gegenseitig aufeinander auf. Der weitgehend schwimmende Transport erleichtert die Handhabung der vergleichsweise schweren Substruktur (Schwergewichtsgründung), wobei es zusätzlich ermöglicht wird, dass die Montage der Windenergieanlage bereits an Land erfolgen kann. Der schwimmende Transport, die zugehörigen Zwischenzustände sowie das Herstellen der Anbindung an den Boden wiederum werden durch die Eigenschaft der Konstruktion der Schwergewichtsgründung begünstigt, die Lasten punktuell, in einigem Abstand und vertikal nur als nach unten gerichtete Kräfte an die Auflager zu übergeben.

Nachfolgend werden mögliche Ausgestaltungen einer erfindungsgemäßen Schwergewichtsgründung und deren Verbringung zu einem und Errichtung an dem Installationsort anhand der beigefügten Figuren erläutert. Dabei zeigen:
- Fig. 1: eine schematische Darstellung einer auf dem Seeboden abgesetzten Schwergewichtsgründung in einer erfindungsgemäßen Ausgestaltung und mit darauf aufgebauter Windenergieanlage;
- Fig. 2: in einer vergrößerten Ansicht die auf dem Seeboden aufgesetzte Schwergewichtsgründung mit einer Unterteilung der horizontalen Erstreckung der Schwergewichtsgründung in unterschiedliche Zonen;
- Fig. 3: in einer perspektivischen Ansicht die Schwergewichtsgründung gemäß Fig. 2;
- Fig. 4: eine Aufsicht auf das Anschluss- und Übergangsstück der Schwergewichtsgründung;
- Fig. 5: eine geschnittene Teilansicht des Anschluss- und Übergangsstücks der Schwergewichtsgründung;
- Fig. 6: in drei Ansichten a) bis c) Varianten einer möglichen Ausgestaltung eines Zwischenabschnitts der Schwergewichtsgründung mit fachwerkartigem Aufbau aus Pfeiler- und Strebenelementen inklusive des Übergangs in den sich weiter aufweitenden Auflagerabschnitt;
- Fig. 7: in vier Darstellungen a) bis d) unterschiedliche Anschlussmöglichkeiten für das Verbinden von Querstreben mit Vertikalpfeilern in dem fachwerkartigen Aufbau des Zwischenabschnitts;
- Fig. 8: in zwei geschnittenen Ansichten a) und b) mögliche Ausgestaltungen von Gründungskörpern an freien Enden der Stützelemente;
- Fig. 9: in zwei geschnittenen Ansichten a) und b) alternative Ausgestaltungen der Gründungskörper an den freien Enden der Stützelemente;
- Fig. 10: eine Anordnung der Schwerkraftgründung auf Transporteinrichtungen für den Horizontaltransport an Land;
- Fig. 11: in drei Ansichten a) bis c) unterschiedliche Stadien bei einer Übergabe der Schwerkraftgründung vom Land- auf den Seetransport in einem Hafen;
- Fig. 12: eine erfindungsgemäße Schwerkraftgründung mit darauf bereits errichteter Windenergieanlage angeordnet in einem als Halbtaucher ausgebildeten Transportschiff für den Wassertransport und für das Eindrücken in den Seeboden;
- Fig. 13: in zwei Ansichten a) und b) die Anordnung gemäß Fig. 12 im Wasser in unterschiedlich ballastierten Zuständen des Halbtauchers;
- Fig. 14: gemäß einem alternativen Transportkonzept zwei auf einer Transportbake aufgesetzte erfindungsgemäße Schwerkraftgründungen mit darauf bereits installierten Windenergieanlagen; und
- Fig. 15: in vier Ansichten a) bis d) den Ablauf des Absetzens einer Transportbarge auf dem Seeboden und des anschließenden Abhebens von Schwerkraftgründungen mit darauf bereits installierten Windenergieanlagen an einem offshore gelegenen Installationsort.

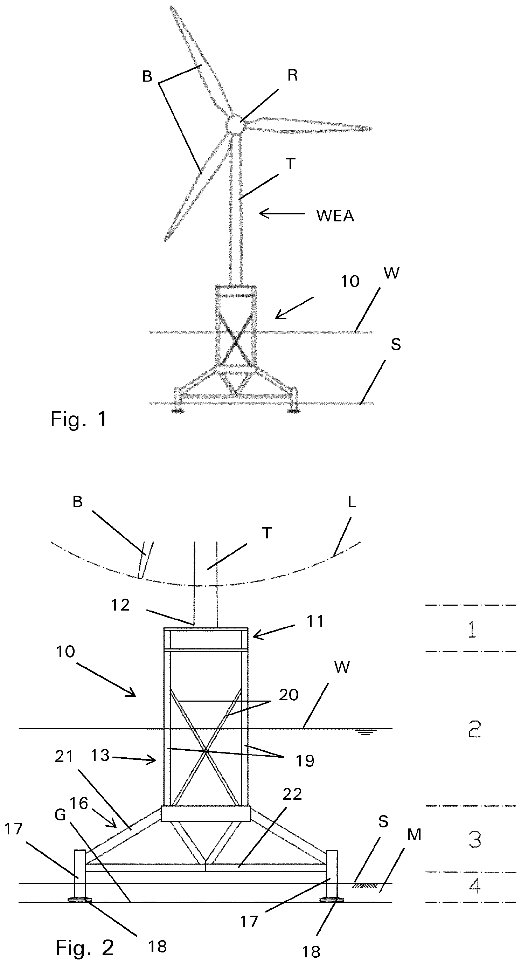

In Figur 1 ist zunächst in einer schematischen Ansicht eine offshore installierte, erfindungsgemäße Schwergewichtsgründung 10 mit einer darauf errichteten Windenergieanlage WEA gezeigt. Die Schwergewichtsgründung 10 ist auf dem Seeboden S aufgestellt und überragt die Wasserlinie W. Deutlich oberhalb der Wasserlinie W ist die Windenergieanlage WEA mit ihrem Turm T auf der Schwergewichtsgründung 10 aufgesetzt und dort fixiert. Rotorblätter B eines Rotors R der Windenergieanlage WEA können einen obersten Abschnitt der Schwergewichtsgründung unter Einhaltung eines Sicherheitsabstandes beim Rotieren frei passieren.

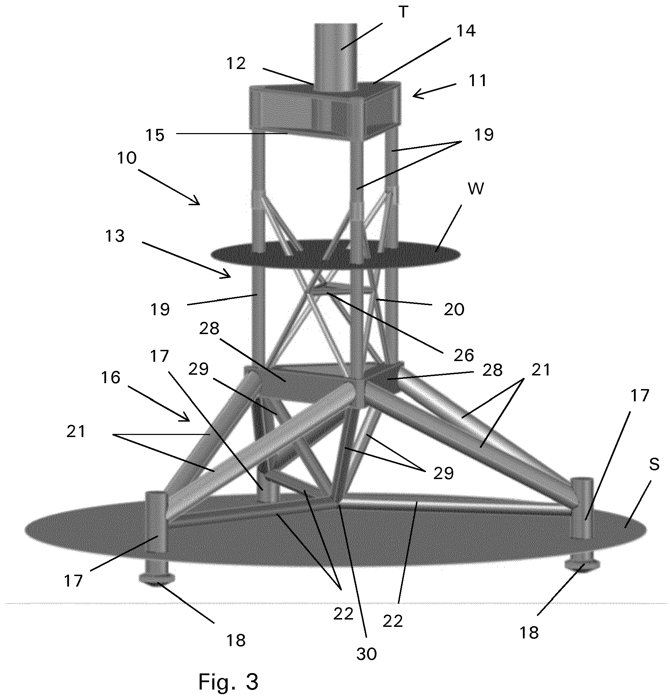

In den Figuren 2 und 3 sind detailliertere Ansichten der nach dem Ausführungsbeispiel gestalteten, erfindungsgemäßen Schwergewichtsgründung 10 gezeigt. Dort ist unter anderem auch noch einmal verdeutlicht, dass die Spitzen der Rotorblätter R beim Drehen des Rotors entlang einer kreisförmigen Linie L laufen, die einen deutlichen Abstand zu den zuoberst gelegenen Strukturen der Schwergewichtsgründung 10 hat.

Die Konstruktion der Schwergewichtsgründung 10 folgt in unterschiedlichen Höhenbereichen unterschiedlichen Prinzipien. Eine entsprechende Aufteilung in Höhenzonen 1 bis 4, die Zonen des Meeres am Aufstellungsort entsprechen, ist in Fig. 2 rechts dargestellt. Eine erste, oberste Zone 1 bezeichnet dabei den Bereich unterhalb des Einflussgebiets der Rotorblätter und oberhalb der höchsten am Aufstellungsort zu erwartenden Wellenkämme zuzüglich Sicherheitsaufschläge (Airgap, Berücksichtigung möglicher Setzungen). In einer zweiten, sich nach unten an die erste Zone 1 anschließenden Zone 2 treten die größten Wellenlasten auf. Eine dritte vertikal unterhalb der zweiten Zone 2 liegende, an diese angrenzende Zone 3 bezeichnet einen Bereich größerer Wassertiefe, in dem deutlich geringere Wellenlasten auftreten. Diese dritte Zone 3 liegt dabei einige Meter oberhalb des Seebodens S. Eine vierte Zone 4 schließlich umfasst den Bereich von einigen Metern oberhalb des Seebodens S bis zu einer Unterkante der Schwergewichtsgründung 10, den in einigen Metern unterhalb des Seebodens S positionierten Sohlflächen von Stützen 17 bzw. der Sohlflächen von an den Stützen 17 an deren freien Enden festgelegten Gründungskörpern 18, die die untersten Strukturelemente der Schwergewichtsgründung 10 bilden. Dabei ist zu erkennen, dass sich die Stützen 17 mit ihren Sohlflächen auf einen festen Grund G (oft in Form von verdichtetem Sandboden) abstützen, der unterhalb einer weniger tragfähigen Zone mit Schichten aus Schlamm, Schlick oder etwa geringer verdichtetem Sand liegt.

Die nach unten zunehmende Aufweitung der Struktur der Schwergewichtsgründung 10 erfolgt bevorzugt in den beiden in Figur 2 mit 1 und 3 gekennzeichneten Zonen bzw. in entsprechenden Abschnitten der Konstruktion der Schwergewichtsgründung 10. Demgegenüber wird mit den in den Zonen 2 und 4 gelegenen Abschnitten der Konstruktion der Schwergewichtsgründung 10 in höherem Maße das Ziel verfolgt, den auftretenden Wasserströmungen vergleichsweise geringe Angriffsfläche zu bieten. In der vierten Zone 4 ist diese besondere Bauform mit den vergleichsweise geringen Querschnitten insbesondere in Hinblick auf eine möglichst geringe Kolkbildung von Interesse. Hier begünstigt der geringe horizontale Querschnitt der Gründungskörper außerdem ihr Einbringen in den Untergrund durch Eindrücken, ggf. unter Spülhilfe. Mögliche hierfür vorgesehene Konstruktionsweisen werden im Folgenden unterteilt nach Höhenzonen beschrieben.

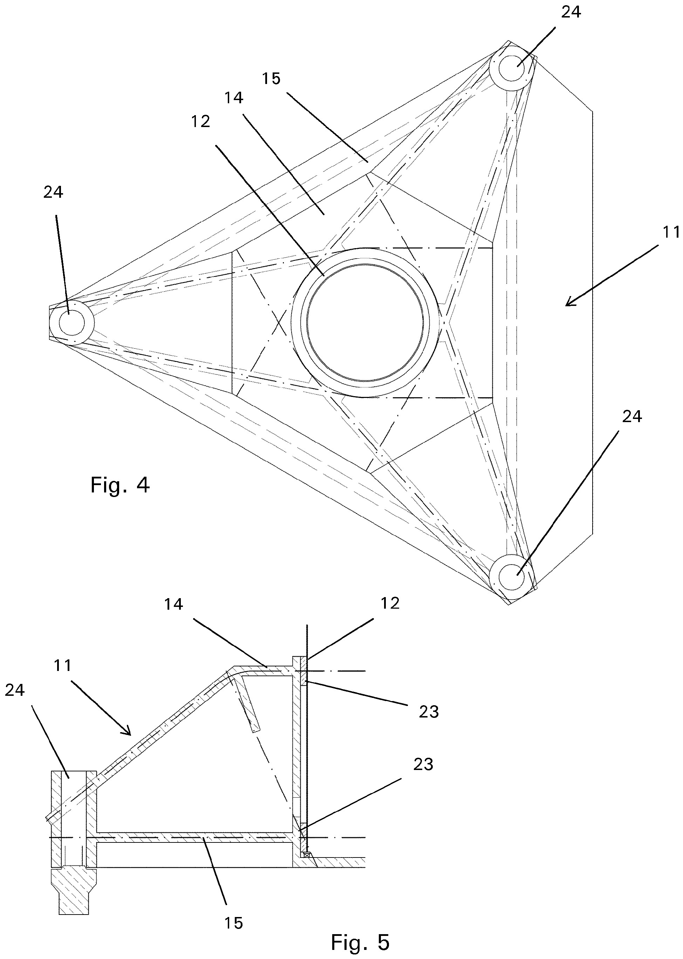

Die obere Aufweitung der Struktur der Schwergewichtsgründung 10 erfolgt im Bereich eines Anschluss- und Übergangsstücks 11 (des sogenanntes Transition Pieces). Dieses Anschluss- und Übergangsstück 11 nimmt mit einer Turmaufnahme 12 einen unteren Abschnitt des Turms T der Windenergieanlage WEA auf und wird vorzugsweise in Spannbetonbauweise erstellt. Das Konstruktionsprinzip und die Spanngliedführung können dabei wie in Figuren 4 und 5 skizziert ausgeführt werden. Die Hauptspannglieder können dabei jeweils beiderseits an Pfeileraufnahmen 24 und an der Turmaufnahme 12 vorbeigeführt und an Plattenenden einer oberen Platte 14 verankert werden. In den Figuren 3 und 4 dargestellt ist die Führung der oberen Spannglieder. In einer unteren Platte 15 verlaufen die Spannglieder entsprechend, wobei die Verankerung hier ebenfalls erst an einem Plattenende erfolgt. Ein zusätzlicher Spanngliedstrang verläuft in den vertikalen Wänden und verbindet den Bereich der Kraftumleitung am Knick in der oberen Platte 14 mit der Unterkante der köcherartig gebildeten Turmaufnahme 12. Hierüber werden sowohl Umlenkkräfte am Plattenknick als auch Eigengewichtskräfte aus dem Turm T abgetragen.

In der in den Figuren 4 und 5 abgebildeten Variante werden das Anschluss- und Übergangsstück 11 und die Pfeiler 19 über aus dem Anschluss- und Übergangsstück 11 sowie aus den Pfeilern 19 herausragende Anschlussbewehrung und nachträglich hergestellten Ortbeton miteinander verbunden. Denkbar wäre an dieser Stelle etwa auch eine sog. Groutverbindung, bei der die Pfeiler 19 in die Pfeileraufnahme 24 im Anschluss- und Übergangsstück 11 hineinragt. Ebenso können alle weiteren Verbindungstechniken aus bekannten Fertigteilbauweisen eingesetzt werden.

In der in Figuren 4 und 5 skizzierten Variante eines in Spannbetonbauweise hergestellten Anschluss- und Übergangsstücks 11 ist die Verbindung zwischen dem Turm T der Windenergieanlage WEA Turm und dem Anschluss- und Übergangsstück 11 als Köcherverbindung vorgesehen. In einer Variante kann dabei die Vertikalkraft aus dem Turm T über elastische Auflager (z.B. Gummiblöcke) übertragen werden, so dass der Momentenabtrag weitgehend über ein horizontales Kräftepaar erfolgt. Die Kraftübertragung erfolgt dabei über Kontakt. Zur Überbrückung eines Spalts zwischen Turm T und Innenwandung der Turmaufnahme 12 kann ein Vergussmaterial zum Einsatz kommen. Zur Entschärfung der Unstetigkeitsstelle an der oberen Kante der köcherförmigen Turmaufnahme 12 kann ein typischerweise nur wenige Millimeter, allenfalls einige Zentimeter starkes elastisches Zwischenmaterial 23 eingelegt werden. Andere Maßnahmen mit vergleichbarer Wirkung bestehen in einer leicht ausgerundeten Ausformung des obersten Bereichs der inneren Oberfläche des unmittelbar mit der Oberfläche des Turms T in Kontakt stehenden Materials oder in der Anordnung von über die obere Kante des eigentlichen Kontaktelements hinausragenden Blechen mit geeigneter Steifigkeit.

Alternativ zu dem Verguss der Fuge zwischen Turmaufnahme 12 und Turm T auf Höhe der beiden horizontalen Platten 14, 15 des Anschluss- und Übergangsstücks 11 können hier auch Verklotzungen vorgesehen werden. Die Zugänglichkeit der unteren Klotzung kann über Öffnungen in der Wand der Turmaufnahme 12 verbessert werden. Eine Tür als Zugang in den Turm T kann in dem Bereich zwischen den horizontalen Hauptscheiben in Form der Platten 14, 15 des Anschluss- und Übergangsstücks 11 angeordnet werden. Um große Anlagenteile austauschen zu können, kann zusätzlich eine verschließbare zentrale Öffnung im Boden (der unteren Platte 15) des Anschluss- und Übergangsstücks 11 vorgesehen werden.

Indem der Verguss bzw. die Verklotzung zwischen Turm T und Turmaufnahme 12 erneuerbar gestaltet werden, wird eine Nachjustierung der vertikalen Ausrichtung des Turms T ermöglicht. Dafür werden einzelne Teile etwa der Klotzung sukzessive ausgebaut und temporär durch Hydraulikpressen ersetzt, bis schließlich ein Justieren über die Pressen möglich ist. Im Anschluss an ein solches Justieren wird der Verguss bzw. wird die Verklotzung wieder eingebaut.

An das Anschluss- und Übergangsstück 11 schließt sich, im errichteten Zustand der Schwergewichtsgründung 10 im Bereich der Zone 2 gelegen, ein Zwischenabschnitt 13 an. Dort ist die Struktur der Schwergewichtsgründung 10 so ausgeführt, dass sie einerseits eine große Steifigkeit aufweist und andererseits nur in mäßigem Umfang Lasten aus Wellenkräften generiert. Hierfür kommt eine fachwerkartige Konstruktion zum Einsatz, die in ähnlicher Form im Zusammenhang mit Offshore-Strukturen grundsätzlich bekannt ist und häufig auch als "Jacket-Struktur" bezeichnet wird. Die Konstruktion besteht im Beispiel aus drei, ggf. auch aus vier oder mehr senkrecht oder schräg verlaufenden Pfeilern 19 sowie aus primären Aussteifungsstreben (Diagonalstreben) 20, die in der Vorzugsvariante zumindest teilweise kreuzweise angeordnet sind (vgl. Fig. 2, Fig. 3 und Fig. 6a)-c)). Für eine zusätzliche Aussteifung der Kreuze senkrecht zur Kreuzebene kann eine sekundäre Aussteifung angeordnet werden, indem die Kreuzungspunkte der primären Aussteifungen (Kreuze) durch im Beispiel drei Streben 26 untereinander verbunden werden. Diese Sekundäraussteifung als Verbindung der Kreuzungspunkte ist in Fig. 3 erkennbar.

Der Kreuzungspunkt der aussteifenden Diagonalstreben 20 werden bei aus dem Offshore-Bereich bekannten Jacketkonstruktionen üblicherweise als Schweißkonstruktionen hergestellt, wobei die Diagonalstreben dort in Form von Stahlrohren realisiert sind und die kreuzenden Streben sich gegenseitig durchdringen. Eine alternative Ausführungsvariante besteht in der vorliegenden Konstruktion darin, dass diese Streben 20 räumlich aneinander vorbei geführt werden. Dafür können die Streben 20 mit einem leichten Knick aus der Auskreuzungsebene heraus (genauer: mit einem gebogenen Teilstück) versehen werden. Die aneinander vorbei geführten Streben 20 werden dennoch kraftschlüssig miteinander verbunden. Hierbei kann zugleich auch die Sekundäraussteifung mit den Streben 26 angeschlossen werden. Dieser Anschluss kann durch eine umschließende Betonkonstruktion oder auch in Form einer Konstruktion realisiert werden, bei der ein großformatiger Bolzen beide Diagonalstreben 20 und die Streben 26 der Sekundäraussteifung durchdringt.

Hinsichtlich der Materialwahl kommen für die Pfeiler 19, die Diagonalstreben 20 und die sekundären Aussteifungsstreben 26 jeweils die Materialien Stahl oder Beton, für die sekundären Aussteifungsstreben 26 darüber hinaus auch Holz und Kunststoff infrage. Als bevorzugte Variante wird hier für die Pfeiler 19 und für die sekundären Aussteifungsstreben 26 Stahl- bzw. Spannbeton gewählt. Für die Diagonalstreben 20 werden im ersten Ansatz Stahlrohre gewählt. Hier kommen jedoch gleichrangig auch Spannbetonquerschnitte infrage (z.B. Vorspannung mit sofortigem Verbund, Vorspannung mit nachträglichem Verbund). Stärker als für die Ausführung als Stahlrohre bietet sich bei Diagonalstreben 20 aus Spannbeton deren Stoß im Kreuzungspunkt an.

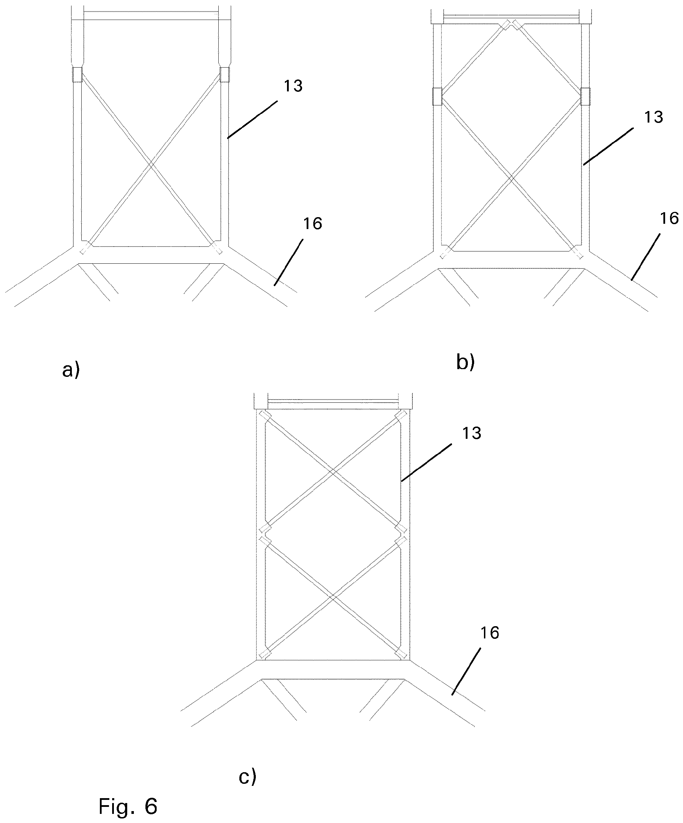

In den Figuren 2, 3, 4 und 6a) ist über die Höhe nur eine Ebene von Aussteifungsstreben 20 dargestellt (eine Auskreuzung). Am oberen Ende der Zone 2 verbleibt dort ein Bereich ohne Aussteifung, weswegen eine rahmenartige Tragwirkung der in das Anschluss- und Übergangsstück 11 eingespannten Pfeiler 19 herangezogen wird. Deren Ausbildung kann durch eine breitere Ausführung eines Pfeilerabschnitts unterstützt werden (vgl. Fig. 6 a)). Eine Alternative zu dieser besonders sparsamen Konstruktionsvariante liegt in der Anordnung von zwei oder mehr Auskreuzungsebenen über die Höhe. Beispiele hierfür sind in Figuren 6b) und 6 c) dargestellt.

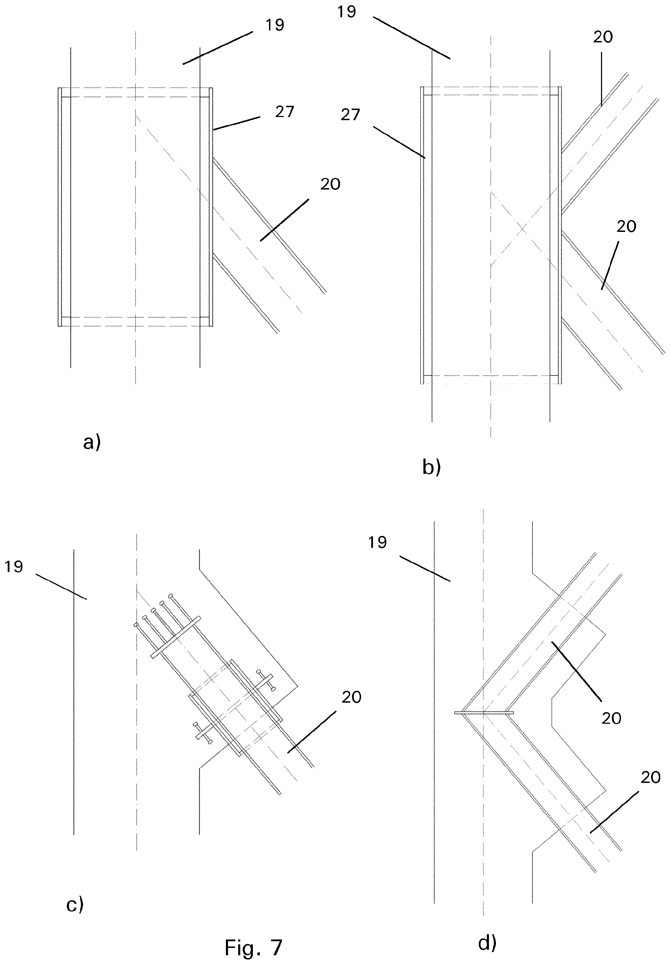

Für den Anschluss der Diagonalstreben 20 an die Pfeiler 19 oder an andere Konstruktionselemente stehen mehrere Verbindungstechniken zur Verfügung:
- Diagonalstreben 20 aus Stahl: Schweißanschluss an eine Manschette 27 aus Stahl, diese wiederum über eine Groutverbindung an den Pfeiler 20 (vgl. Fig. 7 a) bzw. in einer Variante auch Fig. 7 b));
- Diagonalstreben 20 aus Stahl: Anschluss über eine Kopfplatte mit Kopfbolzendübeln;
- Diagonalstreben 20 aus Stahl: Anschluss über ein Köcherfundament mit oder ohne Schubrippen und zusätzliche Verbundmittel zur verbesserten Lastübertragung; ggf. übergeschobene und im Beton verankerte Stahlplatte zur besseren Aufnahme von Querkräften und Momenten, ggf. mit übergeschobenem Rohr; Vergleichmäßigung der Lasteinleitung an der Kante durch Ausrundung des Köchers und/oder Vorsehen weicher Zwischenlagen (Die aufgeführten Varianten sind teilweise in Figur 7 c) dargestellt, wobei sich durch unterschiedliche Kombination von Elementen eine Vielzahl unterschiedlicher Varianten ergibt. Eine Variante für zwei anzuschließende Diagonalstreben ist in Figur 7 d) skizziert.)
- Diagonalstreben 20 aus Spannbeton: Ausbildung eines Köcherfundaments ähnlich Figur 7 c); Erweiterung durch Schubknaggen und/oder Anschlussbewehrung; ggf. Verankerung von Vorspanngliedern mit nachträglichem Verbund auf der Rückseite des Pfeilers 19.

Sämtliche Anschlusstechniken können untereinander kombiniert werden. Um ausreichenden Konstruktionsraum zu gewinnen, können lokale Aufweitungen des Querschnitts des Pfeilers 19 vorgesehen oder die Diagonalstreben 20 können auf unterschiedlichen Seiten in der Höhe versetzt an einen Pfeiler 19 angeschlossen werden.

An den Zwischenabschnitt 13 schließt sich im Bereich der Zone 3, in der sich die Einwirkungen aus Wellen und Strömung in geringerem Maße ungünstig auswirken als in den umgebenden Zonen ein Auflagerabschnitt 16 an, der zur weiteren Lastausbreitung genutzt wird, indem hier eine Aufweitung der Konstruktion in Richtung quer, insbesondere senkrecht, zu einer durch eine Fortführung der vertikalen Mittelachse eines auf der Schwergewichtsgründung 10 in der Turmaufnahme 12 festgelegten Turms einer Windenergieanlage WEA definierten vertikalen Mittelachse erfolgt. Diese Aufweitung erfolgt auf Abmessungen, die wenigstens das Siebenfache des Innenradius der Turmaufnahme 12, insbesondere mehr als das Neunfache beträgt. In der Vorzugsvariante erfolgt dies durch ein in dem Auflagerabschnitt gebildetes Raumfachwerk in Stahlbeton- bzw. Spannbetonbauweise wie in Figur 3 dargestellt. Dabei werden Knotenbereiche und Streben vorzugsweise einzeln als Fertigteile vorgefertigt. Die Verbindung erfolgt über Anschlussbewehrung und in Ortbeton hergestellte Zwischenbereiche oder durch eine andere in den Fertigteilbauweisen existierende Anschlussart. Hierzu können unter anderem auch Techniken des Segmentbrückenbaus herangezogen werden.

Zur besseren Unterscheidung werden die einzelnen Streben und Knoten wie folgt benannt.
- Zentrales Dreieck 28
- Zentralstreben 29
- Zentraler Stern 30
- Schräge Außenstreben 21
- Untere Zugstreben 22
- Stütze 17
- Gründungskörper 18 mit Sohlfläche

Das Profil der Streben 21, 22, 29 ist rund oder mehreckig. Die Streben 21, 22, 29 sind innen hohl oder massiv und mit Rohrdurchführungen etwa zur Verlegung von Kabeln versehen. In Varianten können sie auch als Schleuderbetonrohre und/oder unter Vorsehen einer Vorspannung mit sofortigem Verbund hergestellt werden. Die Gesamtkonstruktion wird nach dem Zusammenbau vorgespannt etwa unter Ausführung von Vorspannung mit nachträglichem oder ohne Verbund. Die Spanngliedführung erfolgt vorzugsweise von jeweils einer der Stützen 17 ausgehend durch die zugehörige untere Zugstrebe 22, dann durch die gegenüberliegend anschließende Zentralstrebe 29 sowie den auf deren anderer Seite anschließenden Pfeiler 19 bis zur Ecke des Anschluss- und Übergangsstücks 11. Die Spannglieder werden entweder durchgehend oder bereichsweise über einen oder mehrere gerade Abschnitte geführt. Weitere Spanngliedstränge werden erforderlichenfalls von der Außenseite jeder Stütze 17 durch die schrägen Außenstreben 21, die jeweils anschließenden Seiten des zentralen Dreiecks 28 sowie die dort gegenüberliegenden schrägen Außenstreben 21 bis auf die Außenseiten der dort jeweils anschließenden Stützen 17 geführt. Auch hier können die Spannglieder entweder durchgehend geführt oder an den Eckpunkten verankert werden.

Der Auflagerabschnitt 16 (auch als untere Lastausbreitungsstruktur bezeichnet) dient außer der Lastausbreitung auch der Einspannung der der Pfeiler 19 sowie der Stützen 17 mit den an deren unteren freien Enden angeordneten Gründungskörpern 18 mit Sohlflächen. Zur Erfüllung dieser Funktion werden insbesondere die schrägen Außenstreben 21 ausreichend steif und tragfähig ausgelegt.

Für die Lasteinleitung bei verschiedenen Transportzuständen der Schwergewichtsgründung 10 werden an der Oberseite der Stützen 17 in diese eingelassene Einleitungspunkte für Zuglasten vorgesehen. Diese können etwa in Form vertikal ausgerichteter, einbetonierter und über Vorspannglieder nach unten verankerter Rohre vorgesehen werden, deren Inneres bis zu einer ausreichenden Tiefe leer bleibt. Zur kraftschlüssigen Verbindung kann in ein solches Außenrohr ein Innenrohr von oben eingeführt und etwa durch einen Bajonettanschluss oder nach außen verschiebbare Bolzen mit ersterem verbunden werden.

Außer durch die beschriebene Vorzugsvariante in Form eines Raumfachwerks ist die Lastausbreitungsstruktur im Auflagerabschnitt 16 auch in Form anderer Konstruktionen realisierbar. So kann etwa unterhalb des fachwerkartig gestalteten Zwischenabschnitts 13 ein horizontaler Stern aus Kastenträgern angeordnet werden, die ebenfalls in Stahlbeton- bzw. Spannbetonbauweise herzustellen wären und deren Unterkante nicht in die Zone 4 hineinragt. In jeden der drei Kastenträger wäre sowohl ein Pfeiler als auch eine Stütze einzuspannen.

Der Auflagerabschnitt 16 mit der in die Breite geführten Konstruktion der Schwergewichtsgründung 10 schließt in seiner flächig ausgedehnten Gestalt oberhalb der Zone 4 ab. Diese letztere Zone 4 wird im Wesentlichen nur durch die vertikal verlaufenden Stützen 17 überbrückt. In dieser Hinsicht ist die vorgeschlagene Gründungsvariante für eine Schwerkraftgründung untypisch, eher mit bekannten Tripilegründungen oder etwa einem Installationsschiff vergleichbar. Die Stützen 17 werden dabei ausreichend bewehrt und vorgespannt, um sinnvoll lang und schmal ausgeführt werden zu können. Dies geschieht vornehmlich mit dem Ziel, ausreichend tief in den Untergrund (bis zu einem festen Grund G) einzudringen und dabei übermäßige Kolkbildung zu vermeiden.

Ein Gründungskörper 18 mit Sohlfläche befindet sich am unteren Abschluss einer jeden Stütze 17 und leitet die Lasten unmittelbar in den Untergrund G ein. Für dieses Konstruktionselement ist eine große Anzahl von Varianten möglich. Dazu gehören grundsätzlich auch sämtliche von Gründungen an Land bekannten Techniken wie etwa Zementinjektionsverfahren, Bodenvermörtelung oder das Einbringen diverser Pfahlvarianten und Bodenverbesserungsmaßnahmen. Als Einbringverfahren ist dabei im Zusammenhang mit der behandelten Gründungsvariante neben allen üblichen Verfahren insbesondere auch das Eindrücken interessant.

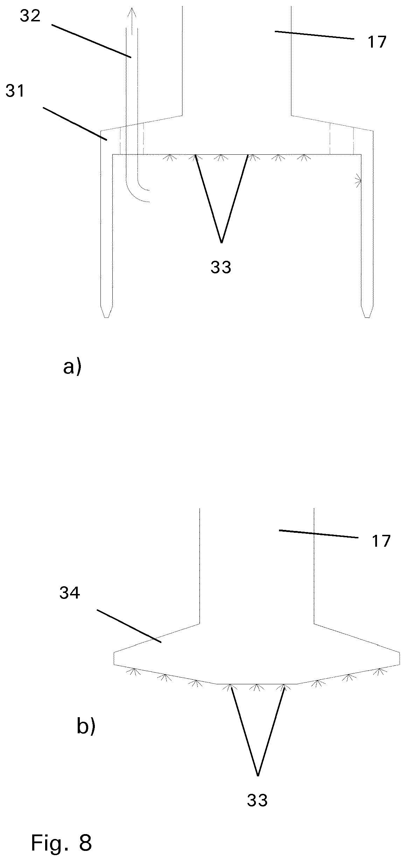

Im betrachteten Zusammenhang bieten sich insbesondere die folgenden beiden Varianten für mögliche Gründungskörper an:
- Suction Bucket, hergestellt aus Stahl-/Spannbeton, eventuell in Teilen auch aus Stahl (vergl. Fig. 8a),
- Spudcan, hergestellt aus Stahl-/Spannbeton (vergl. Fig. 8b)

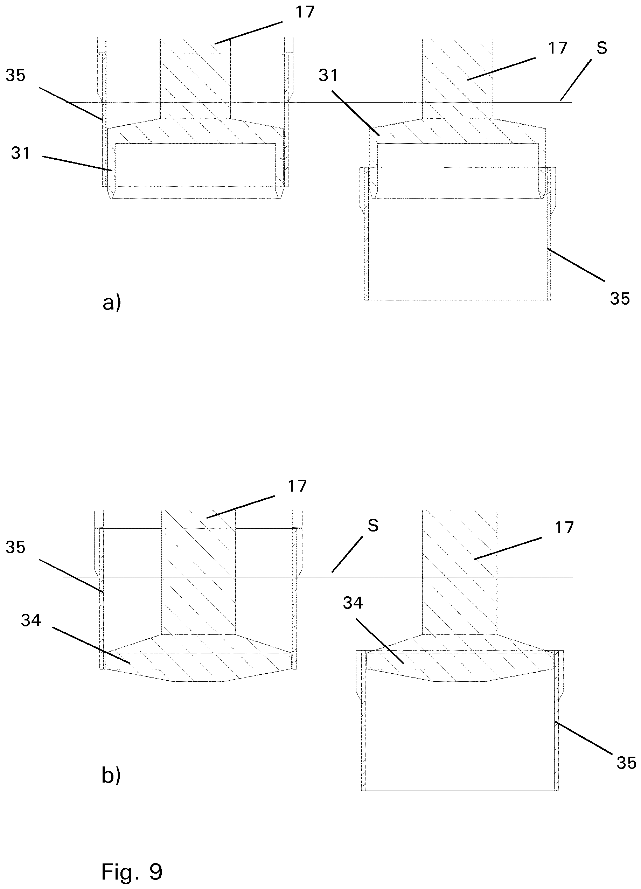

Beide Gründungskörper können ggf. erweitert werden durch eine übergeschobene Manschette aus Stahl oder Stahl-/Spannbeton (Fig 9a, 9b). In beiden Fällen können zur Unterstützung des Einbringens in den Seeboden / Vordringens bis zum festen Grund G, Spülverfahren eingesetzt werden.

Gründungen von Offshore-Windenergieanlagen unter Verwendung von Suction Buckets sind bereits bekannt. Dabei wird während des Installationsvorgangs im Inneren eines nach unten offenen Hohlraums ein Unterdruck aufgebaut, wodurch eine abwärts gerichtete Kraft wirkt, die entscheidend zum Eindringen des Gründungskörpers in den Untergrund beiträgt. Bei der hier betrachteten Gründungsvariante wird eine große abwärts gerichtete Kraft durch Aktivieren der Gewichtkraft, z.B. von Ballastwasser in einem Halbtaucher, mit dem die Schwergewichtsgründung 10 gehalten und verbunden ist, aufgebracht. Somit kann auf die Erzeugung eines Unterdrucks zur Installation bei Bedarf verzichtet werden. Nach der Installation stellt sich die Tragwirkung insbesondere hinsichtlich nach unten gerichteter Kräfte dennoch in gleicher Weise ein. Auf den Ansatz einer Saugwirkung beim Auftreten ggf. doch hervorgerufener abhebender Kräfte wird gemäß dem Prinzip der Schwergewichtsgründung zunächst verzichtet. Es kann aber auch (ggf. zusätzlich) mit einer Saugwirkung gearbeitet werden.

Um die Lastübertragung von der Unterseite des Deckels eines am unteren Abschluss der Stützen 17 jeweils angeordneten Suction Buckets 31 in den Boden zu unterstützen sowie um die Neigung zur Kolkbildung zu verringern, kann es förderlich sein, die oberen, häufig weniger tragfähigen Bodenschichten im Inneren des Suction Buckets 31 zu entfernen, so dass ein tieferes Eindringen erreicht werden kann. Dies kann erfolgen, indem Sediment aus dem Inneren des Suction Buckets 31 durch Spülen entfernt wird. Der Spülvorgang kann ähnlich jenem eines Hobberbaggers durch Ansaugen über einen Saugkopf und ein Saugrohr 32 erfolgen. Dabei können das oder die Saugrohr(e) 32 zum Beispiel seitlich über einen Deckel in den Suction Bucket 31 eingeführt werden. Die Zufuhr von Wasser erfolgt über weitere Öffnungen oder Rohranschlüsse. In einer anderen Variante wird das Sediment über entsprechende Öffnungen oder Rohre nach außen gespült, indem sogenanntes Jettingwasser über Düsen 33 im Inneren des Suction Buckets 31 bei mehr oder weniger hohem Druck eingebracht wird und das Sediment auswäscht. Beide Varianten können auch miteinander kombiniert werden (vgl. Figur 8 a)). Zur besseren Steuerung der Sedimentströme können außerdem Zwischenwände vorgesehen werden.

Ein anderer möglicher Gründungskörper 18 kann die Form einer Spudcan 34 (vergleiche Fig. 8 b)) haben. Solche sind als Fußaufweitungen an den Beinen von Hubplattformen und Installationsschiffen bekannt. Abweichend zu den dortigen Anwendungen kann sie hier vorteilhaft auch in Stahl-/Spannbetonbauweise hergestellt werden. Bei der Installation durchdringt eine Spudcan 34 weichere Bodenschichten bereits ohne Spülhilfe bis in einige Tiefe. Zum Erreichen größerer Eindringtiefen kann ein Jetting-System mit Düsen 33 vorgesehen werden (vgl. Fig. 8b)), durch das die seitliche Verdrängung des Bodens unterstützt wird. Es können dabei unterschiedliche Wasserdrücke vorgesehen werden, die auch pulsierend eingesetzt werden können.

Um die wirksame Sohlebene in eine größere Tiefe zu verlegen, kann sowohl für Gründungskörper 18 des Typs "Suction Bucket" als auch für Gründungskörper 18 des Typs "Spudcan" zusätzliche eine verschiebbare Manschette 35 vorgesehen werden (vgl. Figuren 9 a) und b)). Diese wird bereits bei der Herstellung der Schwergewichtsgründung 10 um den Gründungskörper 18 herum positioniert und kann nach dem Eindrücken und ggf. Einspülen des Gründungskörpers 18 am Einbauort offshore weiter in den Untergrund hineingedrückt werden. Da hierbei nur in geringem Umfang Boden verdrängt werden muss, sind die dafür aufzuwendenden Kräfte moderat. Sie werden z.B. als Teil des Installationsvorgangs von einem noch auf der Schwergewichtsgründung 10 ruhenden Versetzschiff aus über Eindrückstangen aufgebracht. Die erforderlichen Kräfte können z.B. über Hydraulikzylinder aktiviert werden. Die vergrößerte Sohltiefe wirkt sich positiv sowohl auf die Tragfähigkeit als auch auf die Setzungsneigung aus. Solchermaßen mit einer verschiebbaren Manschette 35 versehene Gründungskörper, insbesondere in Form von Suction Buckets 31 bzw. Spudcans 34 können auch in anderen Zusammenhängen als für Gründungen für Offshore-Windenergieanlagen eingesetzt werden und stellen insoweit eine eigenständige Erfindung dar.

### Herstellung und Installation

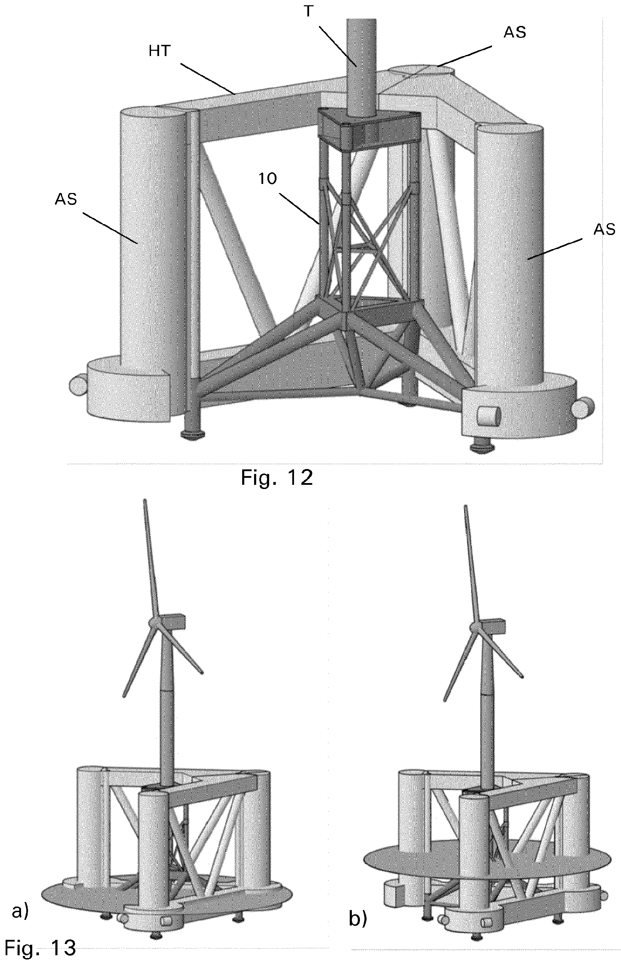

Der hohe Anteil an Konstruktionselementen der erfindungsgemäßen Schwergewichtsgründung 10, die gemäß dem Ausführungsbeispiel in Stahlbetonbauweise ausgeführt werden, ist mit einem im Vergleich zur Stahlbauweise hohen Eigengewicht der Schwergewichtsgründung 10 verbunden. Durch den Verzicht auf zusätzlichen Ballast bewegt sich das Eigengewicht jedoch noch in einem maßvollen Rahmen, so dass eine Transportfähigkeit der Schwergewichtsgründung 10 gewährleistet werden kann. Gleichwohl können Transport und Installation der Schwergewichtsgründung 10 nicht mit üblichen Installationsschiffen erfolgen, sondern erfordern speziell zugeschnittene Konzepte. Dafür wird die Schwergewichtsgründung 10 unter anderem mit einem Versetzschiff zusammengekoppelt, das z.B. die Form eines Halbtauchers HT mit drei Auftriebssäulen AS aufweisen kann, wobei jedoch auf einer Seite die Verbindung zwischen den Auftriebssäulen AS fehlt, um das An- und Abkoppeln der Schwergewichtsgründung 10 zu ermöglichen (vgl. Fig. 12).

Die Breite und das mäßige Gewicht der Schwergewichtsgründung 10 ermöglichen - und dies ist ein weiterer besonderer Vorteil der erfindungsgemäß gestalteten Schwergewichtsgründung - die Montage der Windenergieanlage WEA auf der Schwergewichtsgründung 10 bereits an Land sowie einen gemeinsamen Transport zum Installationsort offshore. Die dafür an Land und auf See erforderlichen Einzelzustände werden in vielfältiger Weise durch den niedrigen Gesamtschwerpunkt der aus Schwergewichtsgründung 10 und Windenergieanlage WEA gebildeten Gesamtstruktur begünstigt sowie dadurch, dass die Reaktionskräfte in geringer Höhe (hier über die Stützen 17) sowohl von unten als auch von oben in die Schwergewichtsgründung 10 eingeleitet werden können.

Bei der Herstellung der Schwergewichtsgründung 10 erfolgt zunächst der Zusammenbau der Struktur des Auflagerabschnitts 16 samt der Stützen 17 und Gründungskörper 18. Dieser Zusammenbau kann insbesondere auf einem eigens dafür vorgesehenen Montagegerüst erfolgen. Indem die Gründungskörper 18 mit den Stützen 17 zunächst in dafür vorgesehene Schächte gestellt werden, erfolgt die Montage des zentralen Sterns 30 sowie der unteren Zugstreben 22 in geringer Höhe über dem Montageplatz. Zunächst wird der zentrale Stern 30 mittig zwischen den Schächten ausgerichtet und wird das Montagegerüst um den zentralen Stern 30 herum errichtet. Anschließend werden die Zentralstreben 29 und das zentrale Dreieck 28 aufgesetzt und durch das Montagegerüst abgestützt sowie daran ausgerichtet. Der Anbau von unteren Zugstreben 22, schrägen Außenstreben 21, Stützen 17 und Gründungskörpern 18 folgen sukzessive unter Verwendung weiterer Montagegerüste.

Parallel kann aufbauend auf dem zentralen Dreieck 28 bereits die Montage des fachwerkartig gestalteten Zwischenabschnitts 13 erfolgen. Es ist sowohl das Aufsetzen des gesamten, vorgefertigten Zwischenabschnitts 13 möglich als auch das Zusammenfügen der Fachwerkstruktur des Zwischenabschnitts 13 vor Ort. Das erste Verfahren bietet sich z.B. für die Konstruktion nach Figur 6 c) an. Insbesondere für Konstruktionen unter Verwendung von Manschettenanschlüssen kann das Zusammenfügen des Zwischenabschnitts 13 jedoch auch unmittelbar am Montageplatz erfolgen.

So können für die Konstruktion nach Figur 6 a) zunächst die beiden an eine Manschette 27 anschließenden Diagonalstreben 20 mit dieser zusammengefügt werden. Abweichend von Figur 3a) sind die Diagonalstreben 20 im Kreuzungspunkt insbesondere anfänglich nicht miteinander verbunden, sondern laufen räumlich aneinander vorbei. Somit ergeben sich mit den beiden an die Manschette 27 angeschlossenen Diagonalstreben 20 zunächst ebene Einzelpositionen. Dieses Bauteil wird nun durch mindestens eine Hilfsstrebe ergänzt, die parallel zum späteren Pfeiler 19 verläuft. Das so entstehende Dreibein wird auf den Auflagerabschnitt 16 aufgesetzt und zunächst provisorisch angeschlossen. In die Manschette 27 wird nachfolgend oder bereits vor der Montage des Dreibeins auf dem zentralen Dreieck 30 der Pfeiler 19 eingeführt. Nach entsprechender provisorischer Befestigung aller drei Beine und sämtlicher Diagonalstreben 20 wird das Anschluss- und Übergangsstück 11 aufgesetzt. Dies kann falls erforderlich auch in mehreren Teilen erfolgen. Danach wird die gesamte Struktur ausgerichtet. Es folgt die Herstellung sämtlicher Anschlüsse durch Verguss, etwa in Form von Köcherfundamenten oder durch andere Verbindungstechniken.

Nach einer ausreichend langen Aushärtungsphase können die Vorspannglieder eingezogen und vorgespannt werden. Im Anschluss ist die Schwergewichtsgründung 10 als Ganzes transportfähig, so dass der Montageplatz für den Zusammenbau der nächsten Schwergewichtsgründung 10 freigegeben werden kann. Nacharbeiten wie ggf. der Verguss der Hüllrohre der Spannglieder oder der Einbau sekundärer Ausstrebungen 26 samt der Verbindung aneinander vorbeilaufender Diagonalstreben 20 können im Nachgang andernorts erfolgen. Letzteres kann zum Beispiel von einer Bühne aus geschehen, die vom Anschluss- und Übergangsstück 11 abgehängt wird.

Die durch das Vorspannen selbsttragend und damit transportfähig gewordene Gründung muss nach dem Entfernen der Hilfsgerüste ggf. zunächst aus den Schächten herausgehoben werden, in denen die Gründungskörper 18 abgesenkt sind. Hierzu können verfahrbare Portalkräne verwendet werden, die an der Lastaufnahmevorrichtung am oberen Ende der Stützen 17 angreifen. Zur Kraftübertragung in den Portalkran können etwa Litzenheber in Verbindung mit einer Traverse und einem in die Lastaufnahmevorrichtung der Schwergewichtsgründung 10 hineinreichenden Innenrohr vorgesehen werden, mit deren Hilfe die Schwergewichtsgründung 10 angehoben werden kann.

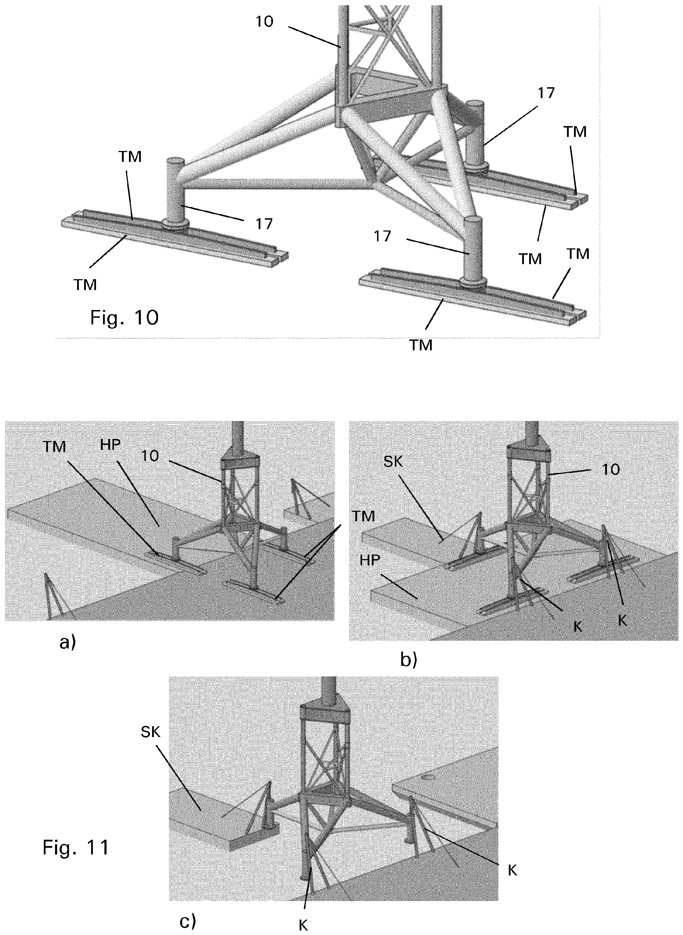

Durch die Portalkrane werden die Gründungskörper 18 ausreichend weit über die Oberfläche des Montageplatzes hinaus angehoben, um das Herunterfahren geeigneter Transporteinrichtungen zu erlauben. Dies kann erfolgen, nachdem die Schächte mit dafür vorgesehenen Deckeln verschlossen sind. Die Transporteinrichtungen können aus einer ausreichenden Anzahl von selbstangetriebenen Transporteinheiten TM, sogenannten Self-Propelled Modular Transportern (SPMT), in Verbindung mit darauf angeordneten Trägern zur Lastverteilung bestehen (vgl. Fig.10).

Die Schwergewichtsgründungen 10 werden an einen Ausrüstungsplatz verbracht, wo sie z.B. mithilfe der verfahrbaren Portalkrane von den Transportmodulen TM abgeladen und auf ihren Gründungskörpern 18 ebenerdig abgestellt werden.

Neben Nacharbeiten aus dem vorangegangenen Montageschritt kann hier insbesondere die Installation der gesamten Windenergieanlage WEA auf der Schwergewichtsgründung 10 erfolgen. Dies umfasst den Anlagenturm T, das Maschinenhaus, die Rotorblätter B und alle weiteren Anbauten. Der für die Installation des Maschinenhauses und der Rotorblätter B benötigte sehr große Kran muss für die Montage vieler Windenergieanlagen WEA nur wenig oder gar nicht verfahren werden. Diese Montage der Windenergieanlage WEA auf der Schwergewichtsgründung 10 bereits an Land spart somit erheblich Zeit und Kosten.

Durch Leerrohre in der Schwergewichtsgründung 10 werden auch die für den Anschluss und die Versorgung der Windenergieanlage WEA benötigten Kabel bereits an Land eingezogen und an die Windenergieanlage WEA angeschlossen. Das von der Windenergieanlage WEA wegführende Kabelende kann auf einer Trommel aufgerollt, auf der Schwergewichtsgründung 10 abgestellt und für die Verlegung auf See vorbereitet werden.

Die gesamte Ausrüstung und alle Arbeiten für die fertige Installation der Windenergieanlage WEA werden bereits an Land vorgenommen. Auch eine erste Inbetriebnahme und ein der Montage nachfolgender Funktionstest können bereits an Land erfolgen. Wegen des bereits installierten Kabels ist dafür auch ein provisorischer Netzanschluss möglich, so dass bereits ein Testbetrieb durchgeführt werden kann. Die Verlegung der weitaus meisten Installationsschritte an Land ist mit deutlichen Kostenvorteilen verbunden.

Nach erfolgter Installation der Windenergieanlage WEA kann die Einheit aus Schwergewichtsgründung 10 und Windenergieanlage WEA erforderlichenfalls zunächst an einen Lagerplatz versetzt werden. Zum Transport an die Installationslokation offshore wird die Einheit schließlich wiederum auf die Transporteinrichtungen TM gehoben (vgl. Fig. 10) und zu einer benachbarten Kaianlage verbracht.

Für den späteren Seetransport werden hier zwei Varianten, einmal Transport per Halbtaucher HT und zudem Transport per Barge BA betrachtet. Für das erstgenannte Konzept wird die Konstruktion zunächst im Hafenbecken abgesetzt. Für das zweite Konzept ist das Absetzen auf einer Transportbarge BA vorgesehen. Beides wird über einen Zwischenzustand erreicht, bei dem die Einheit aus Gründung 10 und darauf montierter Windenergieanlage WEA mit den Lastaufnahmevorrichtungen an den oberen Enden der Stützen 17 in je einem Kran K hängt (vgl. Figur 11 a)). Dabei handelt es sich bei mindestens einem der Kräne um einen Schwimmkran SK bzw. um eine Kranbarge, so dass ein Hafenponton HP und ggf. auch die Transportbarge BA an der Kaikante anlegen können. Die vertikalen Bewegungen im Kran K, bei denen es sich im Wesentlichen um Absenkvorgänge handelt, können z.B. wieder über den Einsatz von Litzenhebern realisiert werden.

Von diesem Zwischenzustand aus wird die Einheit aus Schwergewichtsgründung 10 und Windenergieanlage WEA im Fall des Transports per Halbtaucher HT zunächst auf dem dafür vorbereiteten Boden des Hafenbeckens abgesetzt. Evtl. werden hierfür Schächte zur Aufnahme der Gründungskörper 18 etwas in den Boden des Hafenbeckens eingelassen. Im nächsten Schritt fährt der Halbtaucher HT über die Schwergewichtsgründung 10 und koppelt an den Lastaufnahmevorrichtungen an (vgl. Figur 12). Der Koppelvorgang wird weiter unten noch näher erläutert. Der Halbtaucher HT wird dann so weit gelenzt, dass sich eine günstige Schwimmposition für den Seetransport einstellt.

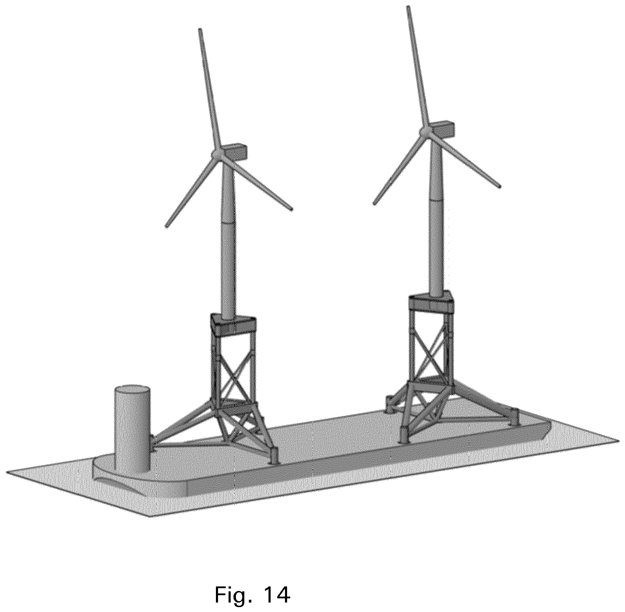

Im Fall des Transports per Barge BA fährt die Transportbarge BA unter die in den Kränen K, SK hängende Einheit aus Schwergewichtsgründung 10 und darauf montierter Windenergieanlage WEA. Diese Einheit kann dann direkt in die dafür vorgesehenen Vorrichtungen der Barge BA abgesenkt werden. Indem die Transportbarge BA nach der Beladung mit der ersten solchen Einheit einmal gedreht wird und mit ihrer anderen Längsseite am Kai anlegt, kann sie trotz einseitig hoher Aufbauten mit mehreren, im Beispiel zwei solchen Einheiten beladen werden (vgl. dazu Figur 14).

Um zu dem in Figur 11 c) gezeigten Zwischenzustand, bei dem die Einheit aus Schwergewichtsgründung 10 und Windenergieanlage WEA über dem Wasser in den Kränen K, SK hängt, zu gelangen, kann ein zusätzlicher Schwimmkörper zum Einsatz gebracht werden, der nur im Hafen agiert. Er wird hier als Hafenponton HP bezeichnet. Dessen Deck wird durch entsprechende Ballastierung auf eine Ebene mit dem Kai gebracht, so dass die Gesamtanlage auf den Transporteinrichtungen TM auf den am Kai vertäuten und ständig nachgelenzten Hafenponton HP hinauffahren kann (vgl. Figur 11 a)).

Der Hafenponton HP wird dann um 90 Grad um die Hochachse gedreht und an jene Stelle desselben oder eines anderen Kais verholt, wo die Verladekräne K stehen. Dort legt gegenüber dem Kai die Kranbarge oder der Schwimmkran SK an den Hafenponton HK an, so dass alle Kräne K, SK mit den Lasteinleitungsvorrichtungen an der Oberseite der Stützen 17 verbunden und die Verbindungsseile bzw. -litzen vorgespannt werden können (vgl. Figur 11 b)). Z.B. durch Lenzen des Hafenpontons HP wird dann die Last vollständig an die Kräne K, SK übergeben, so dass der Hafenponton HP verholt werden kann und der erwähnte Zwischenzustand (s. Figur 11 c)) erreicht ist.

Der Seetransport vom Verladehafen zum Installationsort offshore erfolgt für den Fall des Transports per Halbtaucher HT durch das Verschleppen der bereits im Hafen hergestellten Einheit von Halbtaucher HT (auch: Versetzschiff) und Gesamtheit der Schwergewichtsgründung 10 und der Windenergieanlage WEA (s. Fig. 12). Durch ausreichendes Lenzen des Halbtauchers HT lässt sich ein ausreichend geringer Tiefgang einstellen, um im Hafen und in Küstennähe zu operieren. So wird auch der Schleppwiderstand reduziert. Indem der Halbtaucher HT durch Fluten seiner diversen Schwimmkörper ballastiert wird, lassen sich besonders stabile Schwimmzustände einstellen (vgl. Figuren 13 a) und 13b)).

Für das Verschleppen können z.B. ein oder mehrere Ankerziehschlepper eingesetzt werden. Diese können ggf. unterstützt werden durch seitlich am Halbtaucher HT angebrachte Schubdüsen (Thruster) oder andere eigene Antriebsarten. Der Halbtaucher HT kann damit auch als Versetzschiff bezeichnet werden. An der Installationslokation offshore können die Schubdüsen außerdem als Teil eines dynamischen Positioniersystems dienen, das unter anderem bei der genauen Positionierung der Gesamtanlage am vorgesehenen Standort zum Einsatz kommen kann.

Bei der Variante eines Transports per Barge BA erfolgt der Seetransport auf einer solchen Barge BA, auch Transportbarge genannt (vgl. Figur 14). Diese Barge 14 ist mit Auflagern zur Aufnahme der Gründungskörper 18 der Schwergewichtsgründung 10 ausgerüstet, die vorzugsweise in den Schwimmkörper der Barge BA eingelassen sind. Es können zwei oder mehr aus je einer Gründung 10 und einer darauf montierten Windenergieanlage WEA gebildete Gesamtanlagen gleichzeitig transportiert werden. Die Barge BA ist außerdem mit mindestens einem auf dem Deck befestigten zusätzlichen Auftriebskörper versehen, der beim Absenken der Barge BA die Schwimmstabilität unterstützt. Des Weiteren sind Pump- und ggf. Ankersysteme vorhanden.

Das Bewegen der Barge BA vom Hafen zum Installationsort erfolgt durch mehrere Schlepper. Durch das zusätzliche Vorsehen eines eigenen Antriebs, von Unterkünften, einer Brücke usw. kann die Transportbarge BA ggf. zu einem Transportschiff erweitert werden.

Das Konzept eines Transports per Barge BA sieht ebenfalls ein Versetzschiff (wieder vorzugsweise in Form eines wie in Fig. 12 dargestellten Halbtauchers HT) vor. Dieses operiert jedoch nur am Installationsort offshore, so dass die Fahrten des Halbtauchers HT zwischen Installationsort und Basishafen entfallen. Die Prozedur des Ankoppelns des Halbtauchers HT an die Schwergewichtsgründung 10 erfolgt hier am Installationsort. Um die Positionierung des Halbtauchers HT über den Stützen 17 der Schwergewichtsgründung 10 zu ermöglichen, wird die beladene Transportbarge BA abgesenkt.

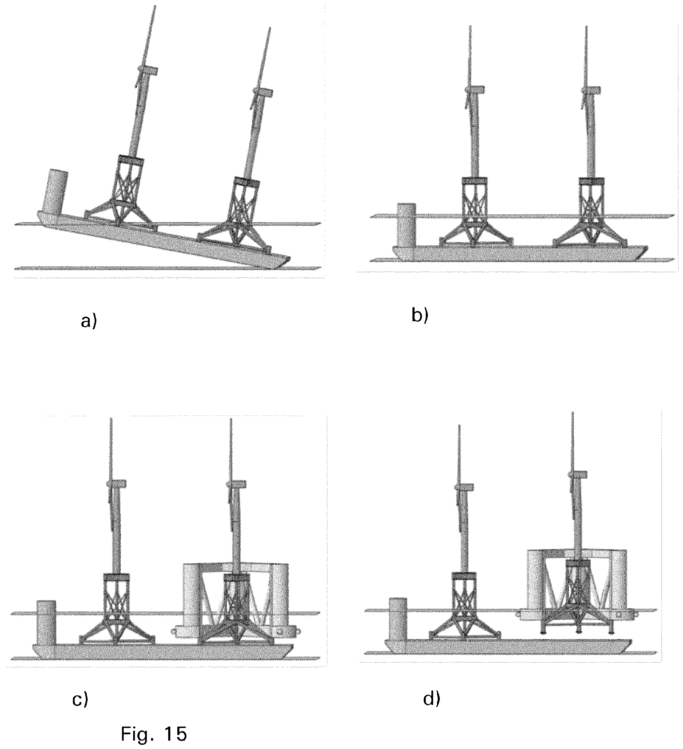

Dies kann dadurch erfolgen, dass die Transportbarge BA auf dem Seeboden S abgesetzt wird. Um hierbei die hydrostatische Stabilität durchgehend zu wahren, wird zunächst in Längsrichtung nur die Seite ohne zusätzlichen Auftriebskörper auf Grund gesetzt. Im Anschluss folgt die zweite Seite (vgl. Figur 15 a) und 15b)). Um ein Verdriften der auf Grund gesetzten Barge BA auszuschließen, können ggf. feste oder ausfahrbare Dorne vorgesehen werden, die unter der Barge BA in den Seeboden S greifen. Zum Absenken der Barge BA kann alternativ auch auf andere Techniken zurückgegriffen werden. Die Barge BA kann z.B. als Halbtaucherbarge oder -schiff ausgeführt werden.

Im Anschluss an das Absenken der Barge BA kann das Versetzschiff (der Halbtaucher HT) mit seinen Ankoppelstellen seitlich und von oben an die Lastaufnahmeeinrichtungen der Stützen 17 heranfahren. Bei dieser Annäherung werden Schäden aus Kollisionen zunächst dadurch vermieden, dass der Halbtaucher HT mit einem leistungsstarken dynamischen Positioniersystem ausgerüstet ist. Darüber hinaus verfügt er als Halbtaucherschiff bereits typbedingt über eine besonders ruhige Schwimmlage. Dennoch auftretende Stöße werden außerdem durch ein am Halbtaucher HT angebrachtes Fendersystem gedämpft. Hierüber legt der Halbtaucher HT an der Schwergewichtsgründung 10 an, und baut an zwei Stellen einen leichten Anlegedruck auf, wobei über die Fender an einer der Stellen eine zweiwertige und an der anderen eine einwertige horizontale Transversallagerung realisiert wird. Die nun noch bestehenden vertikalen und horizontalen Relativbewegungen zwischen den Kontaktpunkten des Halbtauchers HT und den Lastaufnahmen der Schwergewichtsgründung 10 werden durch einen speziellen Koppelvorgang überwunden, der weiter unten beschrieben wird.

Nach erfolgtem Ankoppeln des Halbtauchers HT an die Schwergewichtsgründung 10 wird der Halbtaucher HT gelenzt und wird die Gesamtanlage aus Schwergewichtsgründung 10 und Windenergieanlage WEA somit angehoben. Durch einen speziellen Abkoppelvorgang, der ebenfalls weiter unten beschrieben wird, wird dabei die Schwergewichtsgründung 10 unter Vermeidung von harten Stößen von der Barge BA getrennt (vgl. Figuren 15 c) und d)). Damit ist für die weitere Installation der Gesamtanlage der gleiche Ausgangszustand hergestellt wie er bei dem Konzept eines Transports per Halbtaucher bereits beim Verlassen des Basishafens vorliegt.

Die Einheit aus Gesamtanlage und Halbtaucher HT kann durch den Antrieb des Halbtauchers HT und das damit verbundene dynamische Positioniersystem sehr genau am vorgesehenen Installationsort ausgerichtet werden. Insbesondere im Fall eines Transports per Halbtaucher HT können hierbei die vorhandenen Schlepper Unterstützung leisten. Durch Fluten der Auftriebskörper des Halbtauchers HT wird die Gesamtstruktur so weit abgesenkt, dass die Gründungskörper 18 schließlich den Seeboden S berühren und auf diesem aufsetzen.

Die Auftriebskörper des Halbtauchers HT werden nun weiter geflutet, so dass das Eigengewicht sowohl der Gesamtanlage als auch des Halbtauchers HT auf den Gründungskörpern 18 lastet. Durch Einpumpen von Seewasser in die Säulen AS des Halbtauchers HT wird die Belastung der Gründungskörper 18 darüber hinaus noch erheblich gesteigert, so dass diese deutlich oberhalb der Belastung liegt, die diese rechnerisch im Bemessungslastfall erfahren.

Das so vorgenommene Pre-Stressing führt zu einem erheblichen Eindringen der Gründungskörper 18 in den Untergrund. Dabei werden insbesondere weniger tragfähige obere Bodenschichten durchfahren. Außerdem findet eine gewisse Verdichtung von Bodenschichten unter den Gründungskörpern 18 statt. Dieser gesamte Vorgang kann durch das mehrmalige Aufbringen der Pre-Stressing-Lasten unterstützt werden, was durch das mehrmalige Ablassen und wieder Einpumpen von Wasser in die Säulen AS des Halbtauchers HT erreicht werden kann. Das Aufbringen von Lasten oberhalb der Bemessungslast während des Installationsvorgangs kann außerdem als statische Probebelastung aufgefasst und bei der Erstellung des Sicherheitskonzepts berücksichtigt werden.

Als weitere unterstützende Maßnahme zum tieferen Eindringen der Gründungskörper 18 in den Untergrund kann über ein Leitungssystem in den Gründungskörpern 18 auf verschiedene Weise und mit unterschiedlicher Stärke und Frequenz ein veränderter Porenwasserdruck im Bereich des Gründungskörpers 18 erzeugt werden. Dies kann in Spülvorgänge unterschiedlicher Art übergehen. Dies kann z.B. so erfolgen, wie vorstehend in Bezug auf die möglichen Gestaltungen der Gründungskörper 18 als Suction Buckets oder Spudcans erläutert.

Da der Halbtaucher HT und die Schwergewichtsgründung 10 mit den Gründungskörpern 18 während des gesamten Installationsvorgangs fest miteinander verbunden sind, kann erhebliche Gerätetechnik, die auf dem Halbtaucher HT installiert sein kann, zur weiteren Verbesserung der Kraftübertragung zwischen Gründungskörper 18 und Untergrund sowie zur Verringerung der Setzungsneigung zum Einsatz gebracht werden. Neben unterschiedlichen Spülverfahren und Verfahren zur temporären Bodenverflüssigung können so etwa Maßnahmen zur Bodenverbesserung, Injektionen, Bodenvermörtelung oder unterschiedliche Einbringverfahren von kleineren Pfählen etwa durch Eindrücken eingesetzt werden.

Von besonderem Interesse ist die Möglichkeit, mit dem ausreichend schweren Halbtaucher HT als Widerlager zusätzliche Elemente in den Untergrund einzudrücken, die die Lasteinleitung weiter verbessern. Das Eindrücken kann dabei über vertikale Druckstäbe vom Halbtaucher HT aus erfolgen. Diese wiederum können über Hydraulikzylinder, die sich nach oben an dem Halbtaucher HT abstützen, bewegt werden. So können insbesondere auch die oben erwähnten Manschetten 35, die um die Gründungskörper 18 herum platziert sein können, in den Untergrund eingedrückt und so die wirksame Sohlfuge in tiefere Bodenhorizonte verlegt werden.

Um die Abmessungen der Gründungskörper 18 sowie günstige Maßnahmen für die individuellen Installationsorte planen zu können, können im Vorwege neben Bodenuntersuchungen auch Probebelastungen bis hin zum Originalmaßstab durchgeführt werden. Hierzu werden die vorgesehenen Gründungskörper 18 ohne die weitere Struktur der Schwergewichtsgründung 10 an dem Halbtaucher HT befestigt und an den vorgesehenen Installationsorten probeweise eingedrückt. Sie können durch anschließendes Lenzen der Auftriebssäulen AS des Halbtauchers HT ggf. unter Spülhilfe wieder entfernt und an unterschiedlichen Lokationen eingedrückt werden.

Nach Abschluss der Installation der Gesamtanlage aus Schwergewichtsgründung 10 und Windenergieanlage WEA muss der Halbtaucher HT wieder von der Schwergewichtsgründung 10 getrennt werden. Der hierfür erforderliche Abkoppelvorgang wird weiter unten beschrieben. Durch die unterschiedliche Ballastierung der Säulen AS des Halbtauchers HT und andere entsprechend anzupassende Maßnahmen ist es möglich, die Gesamtanlage bei der Installation weitgehend gerade auszurichten. Wo dies nicht gelingt, kann eine Korrektur etwa im Bereich des Anschluss- und Übergangsstücks 11 und hier z.B. an der köcherartigen Turmaufnahme 12 erfolgen. Gleiches gilt für während der Nutzungsphase eventuell auftretende ungleichmäßige Setzungen. Eine andere Möglichkeit zur Korrektur von Schiefstellungen besteht durch mögliche unterschiedliche Verlängerungen der Pfeiler 19 unterhalb des Anschluss- und Übergangsstücks 11.

Bei dem Versetzschiff handelt es sich um einen Schwimmkörper des Typs Halbtaucher HT mit hier drei Auftriebssäulen AS. Bauartbedingt weisen diese Halbtaucher HT ein besonders ruhiges Schwimmverhalten auf. Der hier vorgesehene Halbtaucher HT zeichnet sich in seiner Bauweise dadurch aus, dass er an einer Seite offen ist, so dass ein An- und Abkoppeln an verschiedene Schwergewichtsgründungen 10 möglich wird (vgl. z.B. Figur 12). Um den Belastungen insbesondere aus Seegangseinwirkungen trotz der an einer Seite offenen Konstruktion standhalten zu können, ist der Halbtaucher HT in einigen Bereichen verstärkt ausgeführt. Dies trifft z.B. für die oberen Riegel zu.

Die Abmessungen werden jeweils auf die zu transportierenden Schwergewichtsgründungen 10 abgestimmt. Ggf. müssen Umbauten erfolgen. Die Bauhöhe sowie der Durchmesser der Auftriebssäulen AS werden so gewählt, dass bei den vorherrschenden Wassertiefen bei der Installation stets ausreichend Ballastwasser aufgenommen werden kann, um die Installation aller Anlagen sicher durchführen zu können.

Technisch ist das Versetzschiff in Form des Halbtauchers HT mit mehreren leistungsfähigen Antrieben (z.B. Thruster) als Teil eines dynamischen Positioniersystems ausgerüstet. Sofern regelmäßig Schlepperunterstützung zur Verfügung steht, können die Antriebe ggf. auch weniger leistungsfähig ausgeführt werden. Des Weiteren ist ein Pumpensystem installiert, um die verschiedenen Schwimm- und Ballastierungszustände zu realisieren. Hinzu kommen ggf. Druckstäbe und Hydraulikzylinder etwa zum Eindrücken von Manschetten 35. Außerdem sind an jeder der Auftriebssäulen AS Einrichtungen vorhanden, die die verschiedenen An- und Abkoppelvorgänge ermöglichen sowie eine ausreichend belastbare kraftschlüssige Verbindung zwischen Versetzschiff und Schwergewichtsgründung 10 erlauben. Ggf. kommen Fendersysteme hinzu.

Insbesondere wenn der Halbtaucher HT am Installationsort offshore verbleibt (bei dem Konzept eines Transports per Barge BA), kann der Halbtaucher HT, der hier auch als Installationsschiff bezeichnet werden kann, auch als Basis für die offshore arbeitenden Mannschaften verwendet werden. Hierfür wird er dann mit Quartieren, sozialen Einrichtungen und dergleichen ausgestattet.

Ein wichtiger Leitgedanke des beschriebenen Installationskonzepts besteht in der kraftschlüssigen und dabei lösbaren Verbindung zwischen Versetzschiff (Halbtaucher HT) und Schwergewichtsgründung 10. Zentrales Element für diese Verbindung ist eine Zug-Druckstrebe, die an ihrem unteren Ende in die oben beschriebene Lasteinleitungsvorrichtung an der Oberseite jeder Stütze 17 eingreift und bis weit in den oberen Bereich der jeweiligen Auftriebssäule AS des Halbtauchers hineinreicht bzw. bis zu ihrem oberen Ende reicht. Dort, wo diese Verbindungsstrebe den Halbtaucher HT nach unten verlässt, ist um die Verbindungsstrebe herum an der Unterseite des Halbtauchers HT ein Auflager angeordnet, das für eine gleichmäßige Lasteinleitung von dem auf den Stützen 17 stehenden Halbtaucher HT in die Stützen 17 sorgt. Die Verbindungsstrebe kann etwa in Form eines runden Rohres mit ausreichendem Stahlquerschnitt realisiert werden.

Um eine kraftschlüssige Verbindung zwischen Halbtaucher HT und Schwergewichtsgründung 10 herzustellen, wird die Verbindungsstrebe über ihre gesamte Länge gegen das Auflager vorgespannt. Dies kann mittels einiger starker Hydraulikzylinder bei geringem Hub erfolgen. Nach erfolgtem Vorspannen wird die Verbindung etwa durch Einlegen von Futterblechen gesichert, so dass die Vorspannung auch etwa bei einem Ausfall der Hydraulik aufrecht erhalten bleibt. Als Alternative oder als zusätzliches Element können für die Übertragung der Vorspannkraft ggf. mehrere über die gesamte Höhe des Halbtauchers HT geführte und über Litzenheber vorgespannte Litzenstränge dienen. Über die beschriebenen Vorspannglieder und Auflager werden die Kräfte zwischen Halbtaucher HT und Schwergewichtsgründung 10 während des gesamten Transports und bei der Installation übertragen.

Während der durchzuführenden Koppelvorgänge wird das Eigengewicht und werden die sonstigen Lasten aus der Schwergewichtsgründung 10 in der Regel über die Gründungskörper 18 an den Untergrund bzw. die Transportbarge BA abgegeben, während der Halbtaucher HT vom Auftrieb des Wassers getragen wird. Hierbei können jedoch, verursacht vornehmlich durch die Wellenbewegung vor dem Herstellen bzw. nach dem nach Lösen der festen Verbindung, Relativbewegungen zwischen Halbtaucher HT und Schwergewichtsgründung 10 und damit starke Stoßbelastungen auftreten. Um diese zu verhindern, müssen die Wellenkräfte in der Phase der Annäherung der beiden Strukturen anderweitig übertragen werden, so dass die angesprochenen Relativbewegungen unterbleiben. Hierfür wird eine zwischenzeitliche Verbindung über die Verbindungsstrebe etabliert, bei der jedoch kein Kontakt am Auflager existiert.

Das Vorgehen wird am Beispiel des Ankoppelvorgangs für das Konzept eines Transports per Barge BA erläutert. Ausgangpunkt ist eine Situation bei der das Versetzschiff in Form des Halbtauchers HT bereits an der auf der Transportbarge BA befindlichen Schwergewichtsgründung 10 angelegt hat und durch das dynamische Positioniersystem über das Fendersystem leicht gegen diese gedrückt wird. Dabei treten in alle Richtungen mäßige Relativbewegungen zwischen Halbtaucher HT und Schwergewichtsgründung 10 auf. Das untere Ende der Verbindungsstrebe befindet sich auf Höhe der unterkante des Halbtauchers HT.

Hier wird zunächst über ein System zur Entfernungsmessung in Echtzeit die Relativposition zwischen Spitze der Verbindungsstrebe und der Lasteinleitungsvorrichtung am oberen Ende der Stütze 17 gemessen. Über einen oder mehrere Hydraulikzylinder mit größerem Hub wird die Verbindungsstrebe in vertikaler Richtung so bewegt, dass nur noch sehr geringe vertikale Relativbewegungen auftreten. Gleiches erfolgt über zwei an der Unterkante des Halbtauchers HT angebrachte Hydraulikzylinder auch entlang der beiden horizontalen Freiheitsgrade. Gleichzeitig wird das untere Ende der Verbindungsstrebe unmittelbar über die Lasteinleitungsvorrichtung bewegt. Dort angekommen werden sämtliche Hydraulikzylinder so weit wie möglich kraftlos geschaltet und die Verbindungsstrebe damit quasi fallen gelassen. Durch eine trichterförmige Geometrie am oberen Ende der Lasteinleitungsvorrichtung wird das Ende der Verbindungsstange somit in die Lasteinleitungsvorrichtung eingeführt. Sie steht dann für einen gewissen Zeitraum auf dem Boden der Lasteinleitungsvorrichtung. Jetzt wird die Zug-Druckverbindung zwischen Verbindungsstrebe und Lasteinleitungsvorrichtung hergestellt, wozu etwa die erwähnte Bajonett- oder Bolzenverbindung dient.

Die vertikale Bewegung des Hydraulikzylinders wird nun über einen gewissen Zeitraum beobachtet. In einem Moment besonders großer Annäherung zwischen Versetzschiff und Lasteinleitungsvorrichtung wird schließlich eine erneute Vergrößerung des Abstands durch die Hydraulik nicht mehr zugelassen. Stattdessen wird dieser sogar noch zügig um eine gewisse Strecke verringert. Unterstützend kann erforderlichenfalls eine gewisse Menge an Ballastwasser rasch abgelassen werden. Auf diese Weise wird eine gewisse Vorspannung gegen den Auftrieb des Halbtauchers HT aufgebracht. Die schwankenden Auftriebskräfte werden nun durch entsprechend schwankende Hydraulikkräfte aufgenommen, wobei sich der oder die Hydraulikzylinder zunächst nicht mehr bewegen.

Im nächsten Schritt wird der Abstand zwischen dem Auflager des Halbtauchers HT und der Oberkante der Stütze 17 weiter verringert. Dabei wird nun in gleichem Maße wie der Tiefgang des Halbtauchers HT ansteigt, Ballastwasser abgelassen, so dass die Vorspannung gegen den Auftrieb konstant bleibt. Zugleich sorgen die horizontal angeordneten Hydraulikzylinder für eine Annäherung auch in dieser Richtung. Sie können dabei durch mechanische Leiteinrichtungen unterstützt werden.

Schließlich kommt bei geringer Annäherungsgeschwindigkeit ein kontrollierter Kontakt zwischen Auflager des Halbtauchers HT und Oberseite der Stütze 17 zustande. Anschließend erfolgt die Vorspannung der Verbindungsstrebe gegen das Auflager und damit die eigentliche kraftschlüssige Verbindung. Die für den Koppelvorgang benötigten vertikalen und horizontalen Hydraulikzylinder mit größerem Hub können nun wieder entlastet werden.

Für den Vorgang des Abkoppelns des Halbtauchers HT vom der Schwergewichtsgründung 10 nach erfolgter Installation kann in umgekehrter Richtung entsprechend verfahren werden. Für das Abkoppeln der Einheit von Halbtaucher HT und Gesamtheit aus Schwergewichtsgründung 10 und darauf montierter Windenergieanlage WEA von der Transportbarge BA wird eine zusätzliche Stangenverbindung zwischen Halbtaucher HT und Transportbarge BA benötigt. Hiermit kann auf wiederum entsprechende Weise das Abkoppeln in vertikaler Richtung erfolgen. Danach kann die Einheit aus Halbtaucher HT und Gesamtheit aus Schwergewichtsgründung 10 und darauf montierter Windenergieanlage WEA durch weiteres Lenzen der Auftriebssäulen AS des Halbtauchers HT nach oben bewegt werden. Die Entkoppelung in horizontaler Richtung kann dann erfolgen, indem die Abstützungen vertikal angeordneter Balken, die die Aufnahmeöffnung für den Gründungskörper 18 in der Transportbarge BA nach oben verlängern, entriegelt werden und in der Folge auf das Deck klappen.

### Bezugszeichenliste

- 1: Zone
- 2: Zone
- 3: Zone
- 4: Zone
- 10: Schwergewichtsgründung
- 11: Anschluss- und Übergangsstück
- 12: Turmaufnahme
- 13: Zwischenabschnitt
- 14: Platte
- 15: Platte
- 16: Auflagerabschnitt
- 17: Stütze
- 18: Gründungskörper
- 19: Pfeiler
- 20: Diagonalstrebe
- 21: schräge Außenstrebe
- 22: untere Zugstrebe
- 23: elastisches Zwischenmaterial
- 24: Pfeileraufnahme
- 26: Strebe
- 27: Manschette
- 28: Zentrales Dreieck
- 29: Zentralstrebe
- 30: zentraler Stern
- 31: Suction Bucket
- 32: Saugrohr
- 33: Düse
- 34: Spudcan
- 35: Manschette

- AS: Auftriebssäule
- B: Rotorblatt
- BA: Barge
- G: fester Grund
- HP: Hafenponton
- HT: Halbtaucher
- K: Kran
- L: Linie
- M: Schlickzone
- R: Rotor
- S: Seeboden
- SK: Schwimmkran
- T: Turm
- TM: Transportmodul
- W: Wasserlinie
- WEA: Windenergieanlage

## Patentansprüche

1. Schwergewichtsgründung (10) für eine Offshore-Windenergieanlage (WEA) mit:
• einem Anschluss- und Übergangsstück (11), zum Verbinden mit einem Turmabschnitt (T) der Windenergieanlage (WEA),
• einem dem Anschluss- und Übergangsstück (11) in einer vertikalen Richtung gegenüberliegenden, unterhalb desselben angeordneten Auflagerabschnitt (16) und
• einem Zwischenabschnitt (13), der sich in vertikaler Richtung erstreckt und das Anschluss- und Übergangsstück (11) mit dem Auflagerabschnitt (16) verbindet,
wobei der Auflagerabschnitt (16) in einer Querrichtung, quer, insbesondere senkrecht, zu der vertikalen Richtung eine größere Ausdehnung hat als das Anschluss- und Übergangsstück (11),
**dadurch gekennzeichnet, dass** der Zwischenabschnitt (13) in einer Fachwerkbauweise mit Pfeiler- (19) und Strebenelementen (20, 26) gebildet ist, dass ein maximaler Abstand eines Endpunktes des Auflagerabschnittes (16) von einer durch eine Verlängerung einer Turmlängsachse einer auf die Gründung (10) aufzusetzenden und mit dem Anschluss- und Übergangsstück (11) zu verbindenden Windenergieanlage (WEA) bestimmten vertikalen Mittelachse der Gründung (10) wenigstens das Siebenfache eines Radius des Anschluss- und Übergangsstücks (11) an einer Verbindungsstelle (12) zum Verbinden mit einem Turmabschnitt (T) der Windenergieanlage (WEA) beträgt und dass an dem Auflagerabschnitt (16) in maximal von der vertikalen Mittelachse der Gründung beabstandeten Bereichen vertikal über den Auflagerabschnitt (16) nach unten vorstehende Stützelemente (17) angeordnet sind, die an ihren unteren Enden Sohlflächen zum Aufstellen der Schwerkraftgründung auf einem Untergrund ausbilden.

2. Schwergewichtsgründung nach Anspruch 1, **dadurch gekennzeichnet, dass** ein Verhältnis der Summe der Flächeninhalte aller an den Enden der Stützelemente (17) gebildeten Sohlflächen zu dem Flächeninhalt einer von einer äußerste Punkte jeweils benachbarter Sohlflächen auf kürzestem Wege verbindenden Umfangslinie eingeschlossenen Grundfläche maximal 1/15, insbesondere maximal 1/20, vorzugsweise maximal 1/30 beträgt.

3. Schwergewichtsgründung (10) nach einem der vorhergehenden Ansprüche, **dadurch gekennzeichnet, dass** ein Verhältnis einer Masse der Schwergewichtsgründung zu dem Flächeninhalt einer von einer äußerste Punkte jeweils benachbarter Sohlflächen auf kürzestem Wege verbindenden Umfangslinie eingeschlossenen Grundfläche zwischen 1 und 10 t/m², insbesondere zwischen 2 und 6 t/m², beträgt.

4. Schwergewichtsgründung (10) nach einem der vorhergehenden Ansprüche, **dadurch gekennzeichnet, dass** ein Verhältnis einer Masse der Schwergewichtsgründung zu einer ersten Kernfläche der Sohlflächen zwischen 1 und 10 t/m², insbesondere zwischen 2 und 6 t/m², beträgt.

5. Schwergewichtsgründung (10) nach einem der vorhergehenden Ansprüche, **dadurch gekennzeichnet, dass** der Zwischenabschnitt (13) sich an das Anschluss- und Übergangsstück (11) vertikal nach unten anschließt und eine in Richtung quer, insbesondere senkrecht, zu der vertikalen Mittelachse gemessene Baubreite aufweist, die entlang der vertikalen Erstreckung des Zwischenabschnitts (13) im Wesentlichen gleichbleibend ist, wobei in dem Auflagerabschnitt (16), der sich an den Zwischenabschnitt (13) vertikal unterhalb desselben anschließt, ein Übergang und eine weitere Verbreiterung der Gründung (10) bis auf die maximale Baubreite des Auflagerabschnitts (16) an einer Unterkante desselben erfolgt.

6. Schwergewichtsgründung (10) nach einem der vorhergehenden Ansprüche, **dadurch gekennzeichnet, dass** der Auflagerabschnitt (16) mit seinen Bestandteilen und die Stützen (17) mit etwaigen daran weiter festgelegten Anbauteilen und/oder dass die Pfeiler- (19) und/oder Strebenelemente (20, 26) aus Beton, insbesondere aus Stahl- oder Spannbeton gebildet sind.

7. Schwergewichtsgründung (10) nach einem der vorhergehenden Ansprüche, **dadurch gekennzeichnet, dass** der maximale Abstand eines Endpunktes des Auflagerabschnittes (16) von der vertikalen Mittelachse wenigstens das Sechsfache, vorzugsweise wenigstens das Siebenfache, besonders bevorzugt wenigstens das Neunfache des Radius des Anschluss- und Übergangsstücks (11) an der Verbindungsstelle (12) zum Verbinden mit einem Turmabschnitt (T) der Windenergieanlage (WEA) beträgt.

8. Schwergewichtsgründung (10) nach einem der vorhergehenden Ansprüche, **dadurch gekennzeichnet, dass** der Auflagerabschnitt (16) eine dreieckige Außenkontur, insbesondere die Außenkontur eines gleichseitigen Dreiecks, aufweist wobei in den Bereichen der Ecken des Dreiecks jeweils ein Stützelement (17) vorgesehen ist.

9. Schwergewichtsgründung (10) nach einem der vorhergehenden Ansprüche, **dadurch gekennzeichnet, dass** die Stützelemente (17) an ihren freien Enden Gründungskörper (18) aufweisen, die einen gegenüber dem Umfangsdurchmesser der Stützelemente (17) vergrößerten Durchmesser, insbesondere einen Durchmesser von 4 bis 9 m, insbesondere von 5 bis 7 m, aufweisen.

10. Schwergewichtsgründung (10) nach einem der vorhergehenden Ansprüche, **gekennzeichnet durch** in den Gründungskörpern (18) der Stützelemente (17) integrierte Düsen (33) für ein Ausströmenlassen von Wasser.

11. Schwergewichtsgründung (10) nach einem der vorhergehenden Ansprüche, **dadurch gekennzeichnet, dass** die Stützelemente (17) über eine Länge von 3 bis 15m, insbesondere von 5 bis 10 m, vertikal nach unten über den Auflagerabschnitt vorstehen.

12. Verfahren zum Aufstellen einer Offshore-Windenergieanlage (WEA), **dadurch gekennzeichnet, dass** eine Schwergewichtsgründung (10) nach einem der Ansprüche 1 bis 11 landgebunden errichtet wird, dass auf der Schwergewichtsgründung (10) landgebunden eine Windenergieanlage (WEA) installiert wird, dass die so gebildete Baueinheit aus Schwergewichtsgründung (10) und Windenergieanlage (WEA) zu einem offshore gelegenen Installationsort verbracht wird und dass die Gründung (10) mit der darauf installierten Windenergieanlage (WEA) am Installationsort auf den Seeboden (S) abgesenkt und dort abgestellt wird.

13. Verfahren nach Anspruch 12, **dadurch gekennzeichnet, dass** ein horizontales und/oder vertikales Versetzen der Schwergewichtsgründung (10) mit der darauf installierten Windenergieanlage (WEA) im Wasser mit Hilfe eines einen einseitig offenen, die Schwergewichtsgründung (10) mit der Windenergieanlage (WEA) seitlich umgreifenden Aufnahmeraumes ausbildenden, an der Schwergewichtsgründung (10) festlegbaren und von dieser lösbaren, als Halbtaucher (HT) ausgebildeten Schwimmkörpers erfolgt.

14. Verfahren nach Anspruch 13, **dadurch gekennzeichnet, dass** der Halbtaucher (HT), insbesondere säulenartig ausgebildete, Ballastanks aufweist, die für ein vertikales Versetzen der Kombination aus Schwergewichtsgründung (10) mit der darauf installierten Windenergieanlage (WEA) mit Ballastwasser befüllt und/oder gelenzt werden.

15. Verfahren nach Anspruch 14, **dadurch gekennzeichnet, dass** die Schwergewichtsgründung (10) mit den daran angeordneten Stützelementen (17) durch Auflasten des mit Ballastwasser befüllten Halbtauchers (HT) in den Seeboden (S) eingedrückt wird.
